(19) Europäisches Patentamt
European Patent Office
Office européen des brevets

(11) **EP 1 786 632 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.07.2020 Patentblatt 2020/30**

(45) Hinweis auf die Patenterteilung:
**23.12.2009 Patentblatt 2009/52**

(21) Anmeldenummer: **05778617.0**

(22) Anmeldetag: **29.08.2005**

(51) Int Cl.:
***B42D 25/324*** *(2014.01)*   ***B42D 25/373*** *(2014.01)*
***B42D 25/328*** *(2014.01)*   ***B42D 25/425*** *(2014.01)*

(86) Internationale Anmeldenummer:
**PCT/EP2005/009287**

(87) Internationale Veröffentlichungsnummer:
**WO 2006/024478 (09.03.2006 Gazette 2006/10)**

(54) **METALLISIERTES SICHERHEITSELEMENT**

METALLISIED SECURITY ELEMENT

ELEMENT DE SECURITE METALLISE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.08.2004 DE 102004042136**

(43) Veröffentlichungstag der Anmeldung:
**23.05.2007 Patentblatt 2007/21**

(73) Patentinhaber: **OVD Kinegram AG**
**6300 Zug (CH)**

(72) Erfinder:
• **SCHILLING, Andreas**
**CH-6332 Hagendorn (CH)**

• **TOMPKIN, Wayne, Robert**
**CH-5400 Baden (CH)**

(74) Vertreter: **Zinsinger, Norbert**
**Louis, Pöhlau, Lohrentz**
**Patentanwälte**
**Merianstrasse 26**
**90409 Nürnberg (DE)**

(56) Entgegenhaltungen:
EP-A- 0 216 947    EP-A- 0 372 274
EP-A- 0 758 587    EP-A1- 1 670 647
EP-A1- 1 747 100    WO-A-93/11510
WO-A1-03/033274    WO-A1-03/043832
WO-A1-03/055691    DE-A1- 4 130 896
US-A- 4 856 857    US-A- 4 882 477

EP 1 786 632 B2

**Beschreibung**

Die Erfindung betrifft ein Sicherheitselement in Form eines mehrschichtige Folienkörpers, der eine Replizierlackschicht und eine auf dieser angeordnete Metallschicht aufweist und bei dem in die Replizierlackschicht eine Reliefstruktur abgeformt ist. Die Erfindung betrifft weiter ein Sicherheitsdokument mit solch einem Sicherheitselement sowie ein Verfahren zur Herstellung eines solchen Sicherheitselements.

Optische Sicherheitselemente werden häufig dazu verwendet, um das Kopieren und den Missbrauch von Dokumenten oder Produkten zu erschweren und, wenn möglich, zu verhindern. So finden optische Sicherheitselemente häufig Verwendung zur Sicherung von Dokumenten, von Banknoten, von Kreditkarten, von Geldkarten und dergleichen. Hierbei ist es bekannt, optisch variable Elemente zu verwenden, die mit herkömmlichen Kopierverfahren nicht dupliziert werden können. Es ist auch bekannt, Sicherheitselemente mit einer strukturierten Metallschicht auszustatten, die in Form eines Textes, Logos oder sonstigen Musters ausgebildet ist.

Das Erzeugen einer strukturierten Metallschicht aus einer beispielsweise durch Sputtern flächig aufgebrachten Metallschicht erfordert eine Vielzahl von Prozessen, insbesondere wenn feine Strukturen erzeugt werden sollen, die eine hohe Fälschungssicherheit aufweisen. So ist es beispielsweise bekannt, eine vollflächig aufgebrachte Metallschicht durch Positiv-/ Negativ-Ätzen oder durch Laser-Ablation partiell zu demetallisieren und damit zu strukturieren. Alternativ dazu ist es möglich, Metallschichten mittels Verwendung von Bedampfungsmasken bereits in strukturierter Form auf einen Träger aufzubringen.

Je mehr Fertigungsschritte zur Herstellung des Sicherheitselements vorgesehen sind, desto größere Bedeutung erhält die Passergenauigkeit der einzelnen Verfahrensschritte.

So beschreibt beispielsweise GB 2 136 352 A ein Herstellungsverfahren zur Herstellung einer mit einem Hologramm als Sicherheitsmerkmal ausgestatten Siegelfolie. Hierbei wird eine Kunststoff-Folie nach dem Einprägen einer diffraktiven Reliefstruktur vollflächig metallisiert und sodann passergenau zu der eingeprägten diffraktiven Reliefstruktur bereichsweise demetallisiert.

Das dokument EP-A-758587 wird auch as nächstliegender stand der Technik gegenüber der Erfindung angesehen. Der Erfindung liegt nun die Aufgabe zugrunde, die Herstellung eines optischen Sicherheitselements, das eine strukturierte metallische Oberflächenschicht aufweist, zu verbessern und ein verbessertes optisches Sicherheitselement mit einer derartigen metallischen Oberflächenschicht anzugeben.

Die Aufgabe der Erfindung wird von einem Sicherheitselement in Form eines mehrschichtigen Folienkörpers gemäß Anspruch 1 gelöst.

Die Erfindung wird weiter von einem Verfahren zur Herstellung eines Sicherheitselements in Form eines mehrschichtigen Folienkörpers gemäß Anspruch 19 gelöst.

Dabei ist die Transparenz im ersten Bereich insbesondere für das menschliche Auge sichtbar erhöht, aber auch eine lediglich über maschinelle optische Meßsysteme erfassbare erhöhte Transparenz kann vorliegen.

Durch die Erfindung wird die Herstellung von Sicherheitselementen verbilligt, bei denen die Metallschicht nicht vollflächig, sondern lediglich in einem Musterbereich vorgesehen sein soll. Die Erfindung sieht nämlich eine gleichmäßige und vollflächige Abscheidung von Metall zur Bildung der Metallschicht auf der Replizierlackschicht vor, wobei die Metallschicht aufgrund der ersten Reliefstruktur im ersten Bereich so dünn ausgebildet wird, daß sie dort transparenter oder als nicht vorhanden erscheint. Bisher notwendige Prozesse zur Strukturierung einer auf die Reliefstruktur aufgebrachten Metallschicht entfallen bei dem erfindungsgemäßen Verfahren. Durch die Erfindung werden bei der Herstellung derartiger Sicherheitselemente kostenintensive und umweltschädliche Verfahrensschritte eingespart, beispielsweise Druck-, Ätz- und Strip-Prozesse, und es wird die Passergenauigkeit bedeutend erhöht.

Mittels des erfindungsgemäßen Verfahrens sind sehr hohe Auflösungen möglich. Die erzielbare Auflösung ist um den Faktor 1000 besser als durch sonstige Verfahren erzielbare Auflösungen. Weil die Breite der Strukturelemente der ersten Reliefstruktur im Bereich der Wellenlänge des sichtbaren Lichtes, aber auch darunter liegen kann, können metallisierte Musterbereiche mit sehr feinen Konturen ausgebildet werden. Damit werden auch in dieser Hinsicht große Vorteile gegenüber den bisher verwendeten Verfahren erzielt, und es ist mit der Erfindung möglich, Sicherheitselemente mit höherer Kopier und Fälschungssicherheit als bisher herzustellen.

Die Erfindung geht in einem heuristischen. Ansatz davon aus, die Oberfläche einer Struktur durch Auflösung in sehr feine Strukturelemente deutlich zu vergrößern, und in diesem Bereich eine flächig aufgebrachte Metallschicht so dünn auszubilden, daß sie transparent bzw, transparenter erscheint. Die Oberfläche wird dabei aus einer Vielzahl von Strukturelementen mit einem hohen Tiefen-zu-Breiten-Verhältnis gebildet. Unter dem Tiefen-zu-Breiten-Verhältnis wird dabei das Verhältnis zwischen einer mittleren Höhe $h$ zweier benachbarter Strukturelemente bzw. einer mittleren Profiltiefe und einem Abstand $d$ zweier benachbarter Strukturelemente bzw. einem Periodenabstand verstanden. Die Metallschicht ist dabei senkrecht auf die von der Replizierlackschicht aufgespannte Ebene mit einer Dicke $t$ abgeschieden, wobei die effektive Dicke der Metallschicht auf der Oberfläche der Replizierlackschicht um so geringer ist, je größer die effektive Oberfläche des Bereiches ist, d.h. je größer das Tiefen-zu-Breiten-Verhältnis der Reliefstruktur des Bereiches ist, auf dem das Metall abgeschieden wird. Eine solche dünne Metallschicht kann transparent oder semitransparent erscheinen, wobei dieser Effekt heuristisch erklärbar ist.

Die effektive Oberfläche S in einem Bereich R, dessen Strukturtiefe durch die Funktion z = f (x,y) bestimmt wird, kann durch folgende Gleichung beschrieben werden:

$$S = \iint_R \sqrt{1 + f_x^2 + f_y^2} \ dA$$

Ein Kreuzgitter mit Perioden $d_x$ in x-Richtung und $d_y$ in y-Richtung, wobei x und y orthogonale Achsen sind, und einer Profiltiefe h kann beispielsweise durch folgende Funktion beschrieben werden:

$$f(x,y) = h \sin^2\left(\frac{\pi x}{d_x}\right) \sin^2\left(\frac{\pi y}{d_y}\right)$$

Wenn die Perioden x und y identisch sind, d.h. $d_x = d_y = d$, ergeben sich hieraus folgende partielle Differentialquotienten:

$$f_x = \frac{\partial}{\partial x} h \sin^2\left(\frac{\pi x}{d}\right) \sin^2\left(\frac{\pi y}{d}\right) = \frac{h\pi}{d} \sin\left(\frac{2\pi x}{d}\right) \sin^2\left(\frac{\pi y}{d}\right)$$

$$f_y = \frac{\partial}{\partial y} h \sin^2\left(\frac{\pi x}{d}\right) \sin^2\left(\frac{\pi y}{d}\right) = \frac{h\pi}{d} \sin^2\left(\frac{\pi x}{d}\right) \sin\left(\frac{2\pi y}{d}\right)$$

Die effektive Oberfläche ist damit durch folgende Gleichung bestimmt:

$$S = \iint_R \sqrt{1 + f_x^2 + f_y^2} \ dA$$

$$= \int_0^d \int_0^d \sqrt{1 + \left(\frac{h\pi}{d}\right)^2 \left[\left(\sin\left(\frac{2\pi x}{d}\right)\sin^2\left(\frac{\pi y}{d}\right)\right)^2 + \left(\sin^2\left(\frac{\pi x}{d}\right)\sin\left(\frac{2\pi y}{d}\right)\right)^2\right]} \ dx dy$$

Diese Gleichung läßt sich nicht auf einfachem Wege analytisch lösen. Durch numerische Lösung dieser Gleichung wurde jedoch überraschend festgestellt, daß sich bei einer auf das Kreuzgitter mit einer nominalen Dicke $t_0$ aufgebrachten Metallschicht, die lokal mit der Dicke t ausgebildet ist, das Dickenverhältnis $\varepsilon = t_0/t$ signifikant erhöht, wenn das Tiefen-zu-Breiten-Verhältnis h/d der Reliefstruktur des Kreuzgitters größer als 1 ist. Durch die Reliefstruktur wird nämlich die Dicke t der Metallschicht in Bezug auf die nominale Dicke $t_0$ (Dicke in "flachen" Bereichen) deutlich vermindert. Beispielsweise ist bei h = 2d, d.h. wenn die Profiltiefe h die zweifache Gitterperiode d ist, das Dickenverhältnis $\varepsilon$ = 3,5. Bei einer Reliefstruktur mit einem Tiefen-zu-Breiten-Verhältnis h/d = 2 beträgt die Dicke t der Metallschicht also nur noch 0,3 $t_0$, d.h. die Metallschicht ist in diesem Bereich nur ein Drittel so dick wie in einem flachen Bereich.

Ein Liniengitter einer Periode d und einer Profiltiefe h kann durch folgende Gleichung beschrieben werden:

$$f(x,y) = h \sin^2\left(\frac{\pi x}{d}\right)$$

Hieraus ergeben sich folgende partielle Differentialquotienten:

$$f_x = \frac{\partial}{\partial x} h \sin^2\left(\frac{\pi x}{d}\right) = \frac{h\pi}{d} \sin\left(\frac{2\pi x}{d}\right)$$

$$f_y = \frac{\partial}{\partial y} h \sin^2\left(\frac{\pi x}{d}\right) = 0$$

Die effektive Oberfläche kann so durch folgende Gleichung beschrieben werden:

$$S = \iint \sqrt{1 + f_x^2 + f_y^2} \ dA$$

$$= \int_0^d \int_0^d \sqrt{1 + \left(\frac{h\pi}{d}\right)^2 \left[\left(\sin\left(\frac{2\pi x}{d}\right)\right)^2\right]} \, dx \, dy$$

$$= \frac{2d^2}{\pi} E\left(\frac{-h^2\pi^2}{d^2}\right)$$

E ($\alpha$) repräsentiert hierbei das gesamte elliptische Integral zweiter Ordnung.

Auch hier haben numerische Lösungen dieser Gleichung überraschend gezeigt, daß sich das Dickenverhältnis $\epsilon$ signifikant erhöht, wenn das Tiefen-zu-Breiten-Verhältnis h/d > 1 ist.

Überraschenderweise hat sich hier gezeigt, daß bei gleichem Tiefen-zu-Breiten-Verhältnis die Erhöhung des Dickenverhältnisses $\epsilon$ bei dem Lineargitter größer ist als bei dem vorher betrachteten Kreuzgitter.

Es kann also vorgesehen sein, die Reliefstruktur als Kreuzgitter oder als Lineargitter auszubilden, d.h. die Reliefstruktur mit einer mathematischen Funktion mit periodischem Verlauf auszubilden, beispielsweise mit sinusquadratischem Verlauf.

Es kann aber auch vorgesehen sein, die Reliefstruktur mit stochastischem periodischen Verlauf auszubilden, wobei ein solcher Verlauf in x-Richtung oder in y-Richtung oder in x-Richtung und in y-Richtung ausgebildet sein kann.

Es ist auch möglich, die Transparenz der Metallschicht mittels Reliefstrukturen zu erzielen, die ein komplexes Oberflächenprofil mit Erhebungen bzw. Vertiefungen unterschiedlicher Höhe aufweisen. Bei derartigen Oberflächenprofilen kann es sich hierbei auch um stochastische Oberflächenprofile handeln. Dabei wird die Transparenz in der Regel erreicht, wenn der mittlere Abstand benachbarter Strukturelemente kleiner als die mittlere Profiltiefe der Reliefstruktur ist und benachbarte Strukturelemente weniger als 200 $\mu$m voneinander entfernt sind. Bevorzugt wird hierbei der mittlere Abstand benachbarter Erhebungen kleiner als 30 $\mu$m gewählt, so daß es sich bei der Reliefstruktur um eine spezielle diffraktive Reliefstruktur handelt.

Vorteilhafte Ausgestaltungen der Erfindung sind in den Unteransprüchen bezeichnet.

Vorteilhafterweise ist die nominale Dicke $t_0$ der Metallschicht so ausgebildet, daß einerseits genügend Transparenz der Metallschicht in den Bereichen mit hohem Tiefen-zu-Breiten-Verhältnis mit Sicherheit eintritt, und daß andererseits die Metallschicht, charakterisiert durch ihre nominale Dicke $t_0$, opak bzw. vorwiegend opak erscheint. Ein Beobachter empfindet typischerweise einen Bereich bereits als opak bzw. als voll reflektierend, wenn 85% des einfallenden Lichtes reflektiert werden, und empfindet einen Bereich bereits als transparent, wenn weniger als 20% des einfallenden Lichtes reflektiert werden und mehr als 60% durchgelassen werden. Diese Werte können in Abhängigkeit vom Untergrund, von der Beleuchtung usw. variieren. Eine wichtige Rolle spielt dabei die Absorption des Lichtes in der Metallschicht. Beispielsweise reflektiert Chrom unter Umständen weitaus weniger.

Dabei ist die Dicke t, die auf einem Strukturelement ausgebildet ist, als ein Mittelwert zu verstehen, denn die Dicke t bildet sich in Abhängigkeit von dem Neigungswinkel der Oberfläche der Reliefstruktur gegenüber der Waagerechten aus. Dieser Neigungswinkel ist mathematisch durch die erste Ableitung der Funktion der Reliefstruktur beschreibbar.

Wenn der lokale Neigungswinkel der Reliefstruktur gleich Null ist, d.h. wenn die Reliefstruktur als planarer Bereich ausgebildet ist, dessen Erstreckungsrichtung senkrecht zur Aufbringungsrichtung der Metallschicht ausgebildet ist, wird die Metallschicht mit der nominalen Dicke $t_0$ abgeschieden. Wenn der Betrag des lokalen Neigungswinkels der Reliefstruktur größer als Null ist, wird die Metallschicht mit der gegenüber der nominalen Dicke $t_0$ geringeren Dicke t abgeschieden.

Bei der Herstellung von transparenten Bereichen ist es wichtig, die einzelnen Parameter in ihren Abhängigkeiten zu kennen und zweckmäßig zu wählen. Dazu können vor allem genaue Berechnungen der Brechungsverhaltens der Strukturen dienen, die die Streuung einschließen sollten.

Vorzugsweise kann vorgesehen sein, die Metallschicht mit einer solchen Flächendichte auf die Replizierlackschicht aufzubringen, die einem Auftrag der Metallschicht auf einer ebenen Fläche mit einem Tiefen-zu-Breiten-Verhältnis gleich Null mit einem Reflexionsgrad der Metallschicht 85% bis 95% des maximal erreichbaren Reflexionsgrades entspricht. Dabei ist der maximal erreichbare Reflexionsgrad von der Art des Metalls abhängig. Metallschichten aus Silber und Gold haben einen sehr hohen maximalen Reflexionsgrad, aber auch Kupfer ist gut geeignet.

Wie sich zeigte, ist insbesondere der Transparenzgrad der Metallschicht außer vom Tiefen-zu-Breiten-Verhältnis der Reliefstruktur abhängig von der Polarisation des aufgestrahlten Lichtes. Es kann vorgesehen sein, diesen Effekt für sekundäre Sicherheitsmerkmale zu nutzen.

Weiterhin zeigte sich, daß der Transparenzgrad und/oder der Reflexionsgrad der Metallschicht wellenlängenabhängig ist. So können also bei der Bestrahlung mit polychromatischem Licht, beispielsweise mit Tageslicht, Farbeffekte zu beobachten sein. Es kann vorgesehen sein, diese Farbeffekte als ein zusätzliches sekundäres Sicherheitsmerkmal zu nutzen.

Es kann vorgesehen sein, daß in den zweiten Bereich der Replizierlackschicht eine zweite diffraktive Reliefstruktur abgeformt ist, wobei die zweite Reliefstruktur mit einem Tiefen-zu-Breiten-Verhältnis < 0,2 ausgebildet ist und auf diese Weise im wesentlichen undurchsichtig ausgebildet ist.

Es kann auch vorgesehen sein, daß die zweite Reliefstruktur ein Tiefen-zu-Breiten-Verhältnis von < 1 aufweist. Auf diese Weise kann vorgesehen sein, daß die erste und die zweite Reliefstruktur einen optisch zusammenhängenden Bereich bilden, in dem ein Transparenzgrad zwischen 0 und 100% ausbildbar ist. Ein solcher Bereich kann beispielsweise vorgesehen sein, um einen sog. Aufblendeffekt für unter diesem Bereich angeordnete Strukturen auszubilden. Auf diese Weise kann beispielsweise ein Paßfoto eines Sicherheitsdokuments mit einem konturlosen Rand ausgebildet sein. Ein solcher Effekt kann ein zusätzliches Sicherheitsmerkmal sein.

Es kann vorgesehen sein, daß der erste Bereich einen in Form eines Logos oder eines Textes ausgebildeten durchscheinenden Musterbereich mit einem hohen Tiefen-zu-Breiten-Verhältnis bildet, in dem ein unter dem Bereich angeordneter Hintergrundbereich sichtbar ist. Es kann aber auch vorgesehen sein, daß der zweite Bereich einen in Form eines Logos oder eines Textes ausgebildeten Musterbereich mit einem niedrigen Tiefen-zu-Breiten-Verhältnis bildet, so daß der Bereich undurchsichtig bzw. metallisch glänzend vor dem Hintergrundbereich ausgebildet ist.

Es ist weiter möglich, daß sich der zweite Bereich als ein feines Linienmuster, beispielsweise eine Guilloche, erstreckt. Der besondere Vorteil der Verwendung der vorliegenden Erfindung liegt hierbei darin, daß dieses feine Linienmuster besonders filigran sein kann und es sich im Register mit allen diffraktiven Sicherheitsmerkmalen befinden kann. Beispielsweise ist in dem ersten Bereich eine Reliefstruktur mit einem hohen Tiefen-zu-Breiten-Verhältnis ausgebildet, und in dem zweiten Bereich ist eine Reliefstruktur mit einem niedrigen Tiefen-zu-Breiten-Verhältnis ausgebildet, welche die filigranen Linien der Guilloche bildet.

Durch den Einsatz der Erfindung ist es möglich, das Tiefen-zu-Breiten-Verhältnis der ersten Reliefstruktur und/oder der zweiten Reliefstruktur in x-Richtung und/oder in y-Richtung diskret oder kontinuierlich zu variieren.

Vorteilhafterweise kann vorgesehen sein, auf diese Weise Rasterelemente mit unterschiedlicher Transparenz bzw. mit unterschiedlicher Opazität auszubilden. Mit Hilfe derartiger Rasterelemente, deren Abmessungen vorteilhafterweise kleiner sind als durch das menschliche Auge auflösbar, können beliebige Bilddarstellungen erzeugt werden.

Es kann vorgesehen sein, nur zwei Arten von Rasterelementen auszubilden, nämlich transparente Rasterelemente und opake Rasterelemente. Auf diese Weise können monochrome Bilder nach Art eines Strich-Bildes erzeugt werden.

Es kann aber auch vorgesehen sein, Bildpunkte mit Rasterelementen auszubilden, deren Grauwert durch das Flächenverhältnis zwischen transparenten und opaken Rasterelementen bestimmt ist. Auf diese Weise können aus den Bildpunkten Schwarz-Weiß-Bilder erzeugt werden.

Es kann auch vorgesehen sein, in Graustufen abgestufte Rasterelemente zu erzeugen, indem das Tiefen-zu-Breiten-Verhältnis der Reliefstruktur den Grauwert des Rasterelementes bestimmt. Auf diese Weise können beispielsweise monochrome Computer-Graustufen-Bilder mit 8 Bit Auflösung wiedergegeben werden.

Die besonderen Vorteile der Erzeugung derartiger Bilder nach dem erfindungsgemäßen Verfahren liegen darin, daß eine besonders feine Rasterung ausbildbar ist, die hohen Ansprüchen genügt, und daß das, Bild sich im Register mit allen diffraktiven Sicherheitsmerkmalen befinden kann. Dabei kann der Rasterabstand unterhalb der Auflösung des menschlichen Auges ausgebildet sein. Die Abmessung der einzelnen Rasterbereiche beträgt hierbei bevorzugt weniger als 300 μm, bevorzugt etwa 50 μm.

Es kann auch vorgesehen sein, daß die erste und/oder die zweite Reliefstruktur aus einer Überlagerung einer Hüllstruktur und einer diffraktiven Struktur mit einem hohen Tiefen-zu-Breiten-Verhältnis gebildet ist. Dabei kann vorgesehen sein, daß die Hüllstruktur eine beugungsoptisch wirkende Struktur ist, insbesondere eine ein Hologramm generierende Reliefstruktur ist. Es kann aber auch vorgesehen sein, daß die Hüllstruktur eine Makrostruktur oder eine Mattstruktur ist. Auf diese Weise wird ohne zusätzlichen technologischen Aufwand eine hohe Passergenauigkeit erreicht, denn die von den ersten und/oder zweiten Reliefstrukturen überdeckten Bereiche sind durch eine resultierende gemeinsame Reliefstruktur gebildet. Bisher notwendige Prozesse zur Strukturierung einer auf die Reliefstruktur aufgebrachten Metallschicht entfallen bei dem erfindungsgemäßen Verfahren.

Vorteilhafterweise kann der mehrschichtige Folienkörper des erfindungsgemäßen Sicherheitselements als eine Transferfolie ausgebildet sein, insbesondere eine Heißprägefolie. Auf diese Weise kann ein Sicherheitsdokument, insbesondere Banknote oder Reisepaß, in bekannter Art und Weise, d.h. mit den vorhandenen Maschinen und Vorrichtungen, mit dem erfindungsgemäßen Sicherheitselement versehen werden.

Vorteilhafterweise ist vorgesehen, die Metallschicht durch Sputtern auf die Replizierlackschicht des erfindungsgemäßen Sicherheitselements aufzubringen. Auf diese Weise kann ein bewährtes Verfahren zur Herstellung der Metallschicht verwendet werden. Vorzugsweise ist vorgesehen, daß ein Metall zur Bildung der Metallschicht in einer solchen Flächendichte auf der durch die Replizierlackschicht aufgespannten Ebene abgeschieden wird, die einem Auftrag der Metallschicht auf einer senkrecht zur Abscheidungsrichtung angeordneten ebenen Fläche mit Tiefen-zu-Breiten-Verhältnis gleich Null mit einem Reflexionsgrad der Metallschicht von 85% bis 95% des maximalen Reflexionsgrades einer optisch undurchlässigen Metallschicht des Metalls entspricht. Dabei kann vorgesehen sein, die Metallschicht nur aus einem einzigen Metall oder aber aus einer Metall-Legierung auszubilden.

Vorteilhafterweise kann vorgesehen sein, daß die Reliefstrukturen mittels UV-Replikation in der Replizierlackschicht abgeformt werden. Auf diese Weise können Reliefstrukturen mit hohem Tiefen-zu-Breiten-Verhältnis besonders einfach und kostengünstig hergestellt werden.

Ein mit dem erfindungsgemäßen Verfahren hergestelltes Sicherheitsmerkmal kann auf einer mit einer diffraktiven Struktur versehenen Replizierschicht mit herkömmlichen Verfahren nur sehr schwer nachgeahmt werden, da ein passergenaues Aufbringen oder Entfernen einer Metallschicht sehr hohe technologische Anforderungen stellt.

Durch diese Varianten oder eine Kombination dieser Varianten ist es möglich, komplexe und optisch ansprechende Sicherheitselemente basierend auf dem Grundgedanken der Erfindung zu verwirklichen.

Im folgenden wird die Erfindung anhand von mehreren Ausführungsbeispielen unter Zuhilfenahme der beiliegenden Zeichnungen beispielhaft verdeutlicht.

Es zeigen

Fig. 1             eine schematische Darstellung eines erfindungsgemäßen Sicherheitselements;

Fig. 2             eine schematische räumliche Darstellung einer Reliefstruktur eines Kreuzgitters;

Fig. 3             eine schematische räumliche Darstellung einer Reliefstruktur eines Lineargitters;

Fig. 4             eine graphische Darstellung des Zusammenhangs zwischen dem Tiefen-zu-Breiten-Verhältnis h/d und dem Dikkenverhältnis $\varepsilon$ für die Reliefstruktur in Fig. 2;

Fig. 5             eine graphische Darstellung des Zusammenhangs zwischen dem Tiefen-zu-Breiten-Verhältnis h/d und dem Dikkenverhältnis $\varepsilon$ für die Reliefstruktur in Fig. 3;

Fig. 6             eine schematische Schnittdarstellung einer erfindungsgemäßen Reliefstruktur;

Fig. 7a und Fig. 7b             eine graphische Darstellung des Zusammenhangs zwischen der Dicke t einer Metallschicht und dem Reflexionsgrad R für verschiedene Metalle;

Fig. 8a bis Fig. 8d             schematische Schnittdarstellungen einer erfindungsgemäßen Reliefstruktur mit unterschiedlichem Tiefen-zu-Breiten-Verhältnis;

Fig. 9a             eine graphische Darstellung des Zusammenhangs zwischen dem Transparenzgrad T bzw. dem Reflexionsgrad R in Abhängigkeit von der Tiefe h für ein erstes metallisiertes Lineargitter bei Beleuchtung mit polarisiertem Licht;

Fig. 9b             eine graphische Darstellung des Zusammenhangs zwischen dem Transparenzgrad T in Abhängigkeit von der Tiefe h für das Lineargitter in Fig. 9a bei Beleuchtung mit unpolarisiertem Licht;

Fig. 9c             eine graphische Darstellung des Zusammenhangs zwischen dem Transparenzgrad T in Abhängigkeit von der Wellenlänge $\lambda$ des Lichtes für ein zweites metallisiertes Lineargitter mit einem Tiefen-zu-Breiten-Verhältnis h/d = 1;

Fig. 9d             eine graphische Darstellung des Zusammenhangs zwischen dem Transparenzgrad T in Abhängigkeit von der Wellenlänge $\lambda$ des Lichtes für das metallisierte Lineargitter in Fig. 9c mit einem Tiefen-zu-Breiten-Verhältnis h/d = 0,67;

Fig. 9e             eine graphische Darstellung des Zusammenhangs zwischen dem Transparenzgrad T in Abhängigkeit von der Wellenlänge $\lambda$ des Lichtes für das metallisierte Lineargitter in Fig. 9c mit einem Tiefen-zu-Breiten-Verhältnis h/d = 0,33;

Fig. 10a bis Fig. 10c     eine graphische Darstellung des Zusammenhangs zwischen dem Transparenzgrad T bzw. dem Reflexionsgrad R in Abhängigkeit von der Wellenlänge $\lambda$ für ein drittes metallisiertes Lineargitter bei Beleuchtung mit unterschiedlichen Beleuchtungswinkeln;

Fig. 11     eine schematische Darstellung der Einstellung unterschiedlicher Transparenz durch Flächenrasterung;

Fig. 12     eine graphische Darstellung des Zusammenhangs zwischen Transparenzgrad T und Tiefen-zu-Breiten-Verhältnis eines Ausführungsbeispiels einer Metallschicht;

Fig. 13     eine schematische Darstellung eines Sicherheitsdokuments mit dem erfindungsgemäßen Sicherheitselement nach Fig. 1;

Fig. 14     eine schematische Darstellung eines zweiten Ausführungsbeispiels eines erfindungsgemäßen Sicherheitselements;

Fig. 15     eine schematische Darstellung eines zweiten Ausführungsbeispiels eines Sicherheitsdokuments mit dem erfindungsgemäßen Sicherheitselement nach Fig. 13;

Fig. 16     eine bildliche Darstellung einer Draufsicht auf ein Sicherheitsdokument mit erfindungsgemäßem Sicherheitselement;

Fig. 17     eine bildliche Darstellung der Guilloche des Sicherheitselements nach Fig. 15.

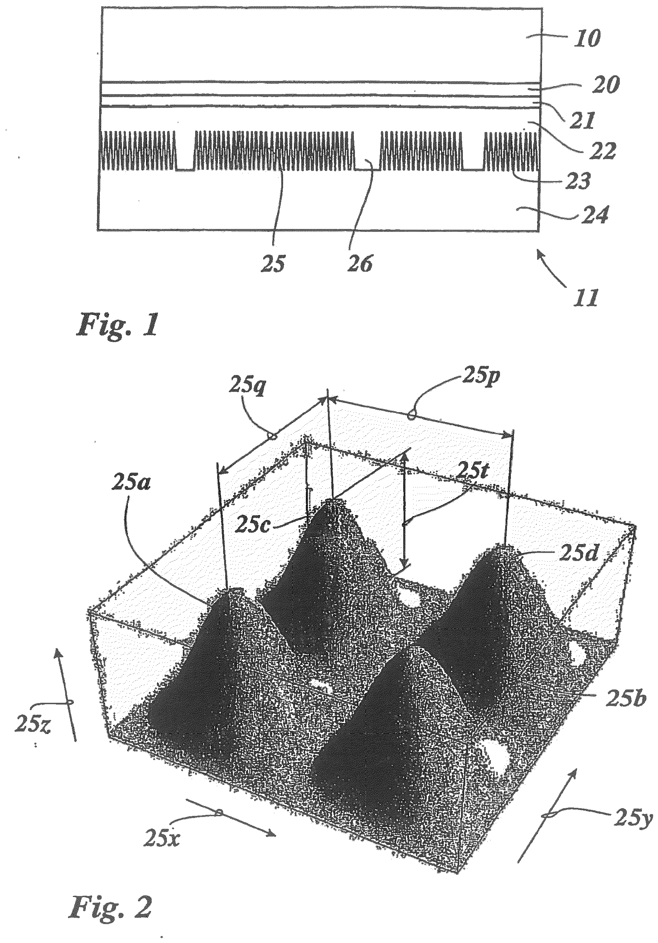

Fig. 1 zeigt ein Sicherheitselement 11 in Form eines mehrschichtigen Folienkörpers, der eine Trägerfolie 10; eine Ablöseschicht 20, eine Schutzlackschicht 21, eine Replizierlackschicht 22 mit Reliefstrukturen 25 und 26, eine auf den Reliefstrukturen 25 und 26 angeordnete äußere Metallschicht 23 und eine Klebeschicht 24 aufweist. Die Reliefstruktur 26 ist als planare Reliefstruktur ausgebildet.

Bei dem Sicherheitselement 11 handelt es sich um eine Prägefolie, insbesondere um eine Heißprägefolie. Es ist jedoch auch möglich, das Sicherheitselement 11 als Laminierfolie oder Stickerfolie auszugestalten.

Die Trägerschicht 10 besteht beispielsweise aus einer PET- oder POPP-Folie einer Schichtdicke von 10 $\mu$m bis 50 $\mu$m, vorzugsweise mit einer Dicke von 19 $\mu$m bis 23 $\mu$m. Auf die Trägerfolie werden sodann mittels einer Tiefdruck-Rasterwalze die Ablöseschicht 20 und die Schutzlackschicht 21 aufgebracht. Die Ablöse- und Schutzlackschichten 20 und 21 haben hierbei vorzugsweise eine Dicke von 0,2 bis 1,2 $\mu$m. Auf diese Schichten könnte auch verzichtet werden.

Sodann wird die Replizierlackschicht 22 aufgebracht.

Die Replizierlackschicht 22 besteht vorzugsweise aus einem strahlenvernetzbaren Replizierlack. Bevorzugt wird ein UV-Replizierverfahren zur Abformung der Reliefstrukturen 25 und 26 in der Replizielackschicht 22 eingesetzt. Als Replizierlack wird hierbei ein UV-härtbarer Lack verwendet. Das Einbringen der Reliefstrukturen 25 und 26 in die UV-vernetzbare Replizierlackschicht erfolgt hierbei beispielsweise durch UV-Bestrahlung bei der Abformung der Reliefstruktur in die noch weiche oder flüssige Lackschicht oder durch partielle Bestrahlung und Aushärtung der UV vernetzbaren Lackschicht. Anstelle eines UV-vernetzbaren Lackes kann hierbei auch ein sonstiger strahlenvernetzbarer Lack eingesetzt werden.

Weiter ist es auch möglich, daß die Replizierlackschicht 22 aus einem transparenten, thermoplastischen Kunststoffmaterial besteht. In die Replizierlackschicht 22 wird anschließend mittels eines Prägewerkzeuges eine Reliefstruktur eingeprägt oder werden mehrere Reliefstrukturen eingeprägt, beispielsweise die Reliefstrukturen 25 und 26.

Die Dicke, die für die Replizierlackschicht 22 zu wählen ist, wird von der für die Reliefstrukturen 25 und 26 gewählten Profiltiefe bestimmt. Es muß sichergestellt sein, daß die Replizierlackschicht 22 über eine ausreichende Dicke verfügt, um ein Abformen der Reliefstrukturen 25 und 26 zu ermöglichen. Vorzugsweise besitzt die Replizierlackschicht 22 hierbei eine Dicke von 0,3 bis 1,2 $\mu$m.

Beispielsweise wird die Replizierlackschicht 22 mittels einer Linienraster-Tiefdruckwalze vollflächig mit einem Auftragegewicht von 2,2 g/m$^2$ vor Trocknung auf die Schutzlackschicht 21 aufgebracht. Als Replizierlack wird hierbei ein Lack folgender Zusammensetzung gewählt:

| Komponente | Gewichtsanteil |
|---|---|
| Hochmolekulares PMMA-Harz | 2000 |

(fortgesetzt)

| Komponente | Gewichtsanteil |
|---|---|
| Silikonalcyd ölfrei | 300 |
| Nichtionisches Netzmittel | 50 |
| Niedrigviskose Nitrocellulose | 12000 |
| Toluol | 2000 |
| Diaceton-Alkohol | 2500 |

Anschließend wird die Replizierlackschicht 22 in einem Trockenkanal bei einer Temperatur von 100 bis 120 °C getrocknet.

Sodann werden in die Replizierlackschicht 22 die Reliefstrukturen 25 und 26 beispielsweise mittels einer aus Nickel bestehenden Matrize bei etwa 130 °C eingeprägt. Zum Einprägen der Reliefstrukturen 25 und 26 wird die Matrize vorzugsweise elektrisch aufgeheizt. Vor dem Abheben der Matrize von der Replizierlackschicht 22 nach Prägung kann die Matrize hierbei wieder abgekühlt werden. Nach Einprägen der Reliefstrukturen 25 und 26 erhärtet der Replizierlack der Replizierlackschicht 22 durch Vernetzung oder in sonstiger Weise.

Weiter ist es auch möglich, die Reliefstrukturen 25 und 26 durch ein Ablationsverfahren in die Replizierlackschicht 22 einzubringen. Dazu eignet sich besonders ein Laser-Abtragungsverfahren.

Es kann auch vorgesehen sein, die Replizierlackschicht 22 mit einem HRI-Material (HRI = high reflection index) zu beschichten, zum Beispiel mit ZnS oder $TiO_2$. Auf diese Weise kann in einigen Fällen eine größere Transparenz bei gegebener Tiefe der Reliefstruktur ausgebildet sein.

Bei den Reliefstrukturen 25 und 26 handelt es sich hierbei um mit Reliefstrukturen, die in einem gemeinsamen Beschichtungsverfahen, beispielsweise Sputtern, mit der Metallschicht 23 beschichtet werden, so daß die Flächendichte der Metallschicht 23 auf den Reliefstrukturen 25 und 26 konstant ist. Dadurch wird die Metallschicht 23 auf der Reliefstruktur 26, die ein niedriges Tiefen-zu-Breiten-Verhältnis hat, opak ausgebildet und die Metallschicht 23 auf der Reliefstruktur 25, die ein hohes Tiefen-zu-Breiten-Verhältnis hat, transparent ausgebildet. Beispielsweise ist die Reliefstruktur 26 mit dem Tiefen-zu-Breiten-Verhältnis h/d = 0 ausgebildet.

Anschließend wird die Klebeschicht 24 auf die Metallschicht 23 aufgebracht. Bei der Klebeschicht 24 handelt es sich vorzugsweise um eine Schicht aus einem thermisch aktivierbaren Kleber. Je nach Einsatz des Sicherheitselements 11 ist es aber auch möglich, auf die Klebeschicht 24 zu verzichten.

Bei der Reliefstruktur 25 handelt es sich um eine Struktur mit einem hohen Tiefen-zu-Breiten-Verhältnis der Strukturelemente der Reliefstruktur und damit hat diese Reliefstruktur eine um ein Vielfaches höhere effektive Oberfläche als übliche, für die Erzeugung von optischen Effekten in Sicherheitselementen abgeformte Reliefstrukturen. Dabei ist die Tiefe als der mittlere Abstand zwischen den Spitzen und Tälern und die Breite als der Abstand zweier benachbarter Strukturelemente der Reliefstruktur zu verstehen. Es wurde überraschend festgestellt, daß sich bei einer auf der Reliefstruktur mit einer nominalen Dicke $t_0$ aufgebrachten Metallschicht, die lokal mit der Dicke t ausgebildet ist, das Dickenverhältnis $\varepsilon = t_0/t$ signifikant erhöht, wenn das Tiefen-zu-Breiten-Verhältnis h/d der Reliefstruktur größer als 1 ist. Durch die Reliefstruktur wird nämlich die Dicke t der Metallschicht in Bezug auf die nominale Dicke $t_0$ (Dicke in "flachen" Bereichen) deutlich vermindert. Die Metallschicht kann auf diese Weise transparent ausgebildet sein.

Fig. 2 zeigt nun eine vergrößerte schematische Darstellung eines Ausführungsbeispiels der in Fig. 1 gezeigten Reliefstruktur 25, die zur Ausbildung von Transparenz der auf der Reliefstruktur angeordneten Metallschicht 23 eingerichtet ist.

Wie in Fig. 2 dargestellt, handelt es sich in diesem Beispiel bei der Reliefstruktur 25 um eine periodische Funktion f (x, y), wobei Pfeile 25x und 25y die bezeichneten Koordinaten-Achsen x und y repräsentieren. Die Funktion f (x, y) verändert die Tiefe 25z der Reliefstruktur 25 periodisch, im dargestellten Fall sinusquadratförmig, sowohl in x- als auch in y-Richtung. Dadurch ergibt sich das in Fig. 2 dargestellte Reliefprofil mit Strukturelementen 25a, 25b, 25c und 25d, die jeweils in x-Richtung eine Periodenlänge 25p und in y-Richtung eine Periodenlänge 25q der Funktion f (x, y) voneinander entfernt sind und eine Strukturtiefe 25t haben. Die Periodenlängen 25p und 25q sind hierbei so gewählt, daß sie kleiner oder gleich der Strukturtiefe 25t sind.

Die in Fig. 2 gezeigte Reliefstruktur 25 hat so beispielsweise Periodenlängen 25p und 25q von 330 nm und eine Strukturtiefe 25t von mehr als 500 nm.

Es ist hierbei auch möglich, sowohl die Profilform, die Periodenlängen 25p und 25q und die Profiltiefe 25t abweichend von der Darstellung nach Fig. 2 zu gestalten. Wesentlich ist hierbei, daß wenigstens eine der Periodenlängen 25p und 25q kleiner oder gleich der Strukturtiefe 25t ist. Besonders gute Ergebnisse werden erzielt, wenn wenigstens eine der Periodenlängen 25p und 25q kleiner als die Grenzwellenlänge des sichtbaren Lichtes ist.

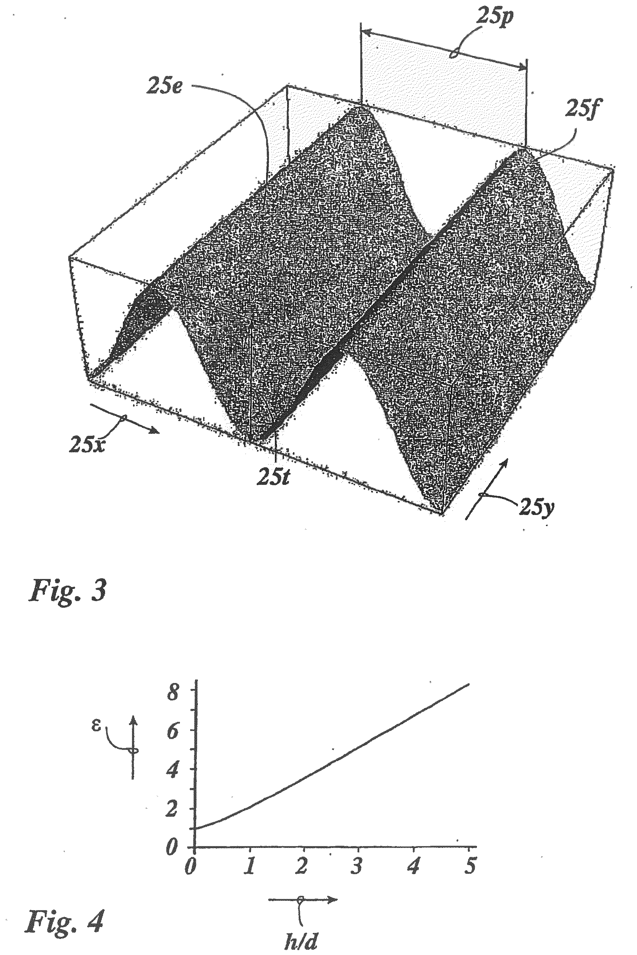

Fig. 3 zeigt eine Reliefstruktur, die nur in einer Koordinatenrichtung Strukturelemente 25e und 25f aufweist. Die übrigen Bezugszeichen sind wie in Fig. 2 gewählt, so daß nur auf die Unterschiede zum Ausführungsbeispiel in Fig.

2 Bezug genommen wird. Die Strukturelemente 25e und 25f erstrecken sich mit konstanter Strukturtiefe 25t in Richtung der y-Koordinate 25y. Auch die in Fig. 3 schematisch dargestellte Reliefstruktur erscheint transparent.

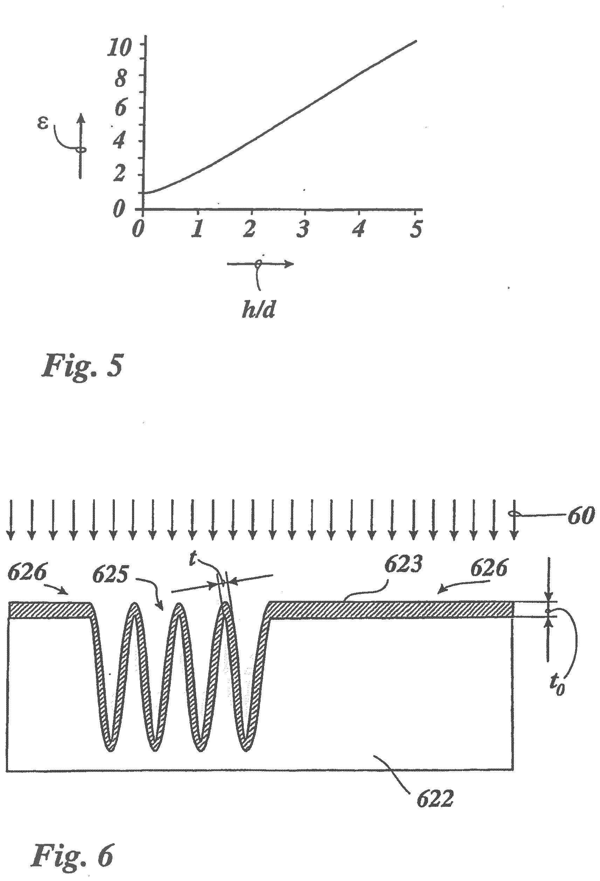

Die Fig. 4 und 5 zeigen nun für die in Fig. 2 und 3 dargestellten Reliefstrukturen den Zusammenhang zwischen dem Dickenverhältnis $\varepsilon = t_0/t$ der Metallschicht 23 und dem Tiefen-zu-Breiten-Verhältnis h/d der Reliefstruktur 25.

Überraschenderweise hat sich hier gezeigt, daß die Erhöhung des Dickenverhältnisses $\varepsilon$ bei dem Lineargitter (s. Fig. 3) größer ist als bei dem vorher betrachteten Kreuzgitter (s. Fig. 2) mit demselben Tiefen-zu-Breiten-Verhältnis.

Beispielsweise ergibt sich bei gleichen Tiefen-zu-Breiten-Verhältnis h/d = 2 für das Lineargitter das Dickenverhältnis $\varepsilon$ = 4,2, das größer ist als das Dickenverhältnis für das oben betrachtete Kreuzgitter.

In Figur 6 ist nun der für die Ausbildung der Transparenz verantwortliche Dickenänderungseffekt der Metallschicht 23 im einzelnen dargestellt.

Fig. 6 zeigt in einer schematischen Schnittdarstellung eine Replizierlackschicht 622 mit einer Reliefstruktur 625 mit hohem Tiefen-zu-Breiten-Verhältnis und mit einer Reliefstruktur 626 mit einem Tiefen-zu-Breiten-Verhältnis gleich Null. Auf der Replizierlackschicht 622 ist eine Metallschicht 623 angeordnet, beispielsweise durch Sputtern aufgebracht. Pfeile 60 bezeichnen die Auftragsrichtung der Metallschicht 623. Die Metallschicht 623 ist im Bereich der Reliefstruktur 626 mit der nominalen Dicke $t_0$ ausgebildet und ist im Bereich der Reliefstruktur 625 mit der Dicke t ausgebildet, die kleiner als die nominale Dicke $t_0$ ist. Dabei ist die Dicke t als ein Mittelwert zu verstehen, denn die Dicke t bildet sich in Abhängigkeit von dem Neigungswinkel der Oberfläche der Reliefstruktur gegenüber der Waagerechten aus. Dieser Neigungswinkel ist mathematisch durch die erste Ableitung der Funktion der Reliefstruktur beschreibbar.

Wenn also der Neigungswinkel gleich Null ist, wird die Metallschicht 623 mit der nominalen Dicke $t_0$ abgeschieden, wenn der Betrag des Neigungswinkels größer als Null ist, wird die Metallschicht 623 mit der Dicke t abgeschieden, d.h. mit einer geringeren Dicke als die nominale Dicke $t_0$.

Es auch möglich, die Transparenz der Metallschicht mittels Reliefstrukturen zu erzielen, die ein komplexes Oberflächenprofil mit Erhebungen und Vertiefungen unterschiedlicher Höhe aufweisen. Bei derartigen Oberflächenprofilen kann es sich hierbei auch um stochastische Oberflächenprofile handeln. Dabei wird die Transparenz in der Regel erreicht, wenn der mittlere Abstand benachbarter Strukturelemente kleiner als die mittlere Profiltiefe der Reliefstruktur ist und benachbarte Strukturelemente weniger als 200 $\mu$m voneinander entfernt sind. Bevorzugt wird hierbei der mittlere Abstand benachbarter Erhebungen kleiner als 30 $\mu$m gewählt, so daß es sich bei der Reliefstruktur um eine spezielle diffraktive Reliefstruktur handelt.

Bei der Ausbildung von transparenten Bereichen ist es wichtig, die einzelnen Parameter in ihren Abhängigkeiten zu kennen und zweckmäßig zu wählen. Ein Beobachter empfindet einen Bereich bereits als voll reflektierend, wenn 85% des einfallenden Lichtes reflektiert werden, und empfindet einen Bereich bereits als transparent, wenn weniger als 20% des einfallenden Lichtes reflektiert werden und mehr als 80% durchgelassen werden. Diese Werte können in Abhängigkeit vom Untergrund, von der Beleuchtung usw. variieren. Eine wichtige Rolle spielt dabei die Absorption des Lichtes in der Metallschicht. Beispielsweise reflektieren Chrom und Kupfer unter Umständen weitaus weniger. Das kann bedeuten, daß nur 50% des einfallenden Lichtes reflektiert werden, wobei der Transparenzgrad kleiner als 1% ist.

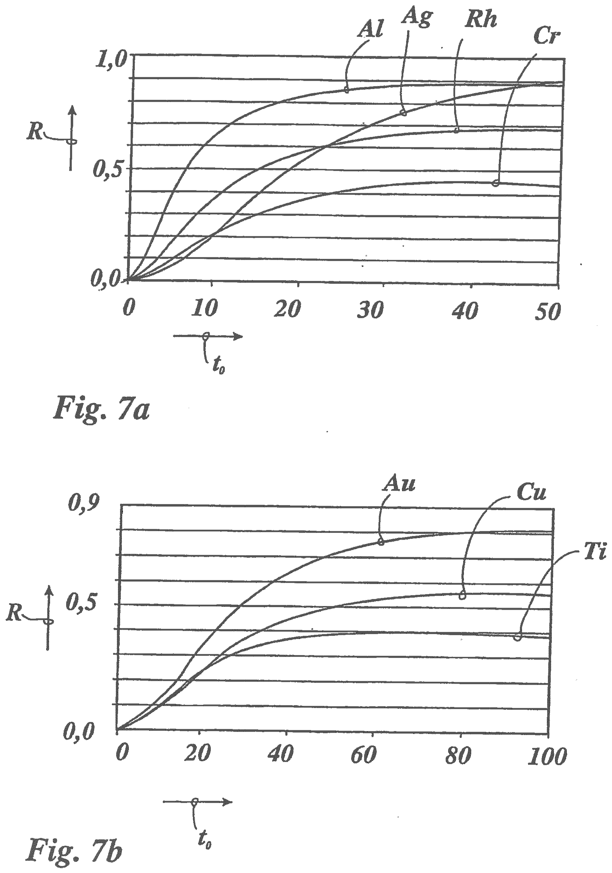

Die Figuren 7a und 7b zeigen nun die Zusammenhänge zwischen der Dicke t der Metallschicht in nm und einem Reflexionsgrad R in % für eine Bestrahlung der Reliefstruktur mit Licht mit einer Wellenlänge $\lambda$ = 550 nm in Abhängigkeit von der Metallart. Dabei ist die Metallschicht auf einem durchsichtigen Substrat aufgebracht, das mit einem Brechungsindex n = 1,5 ausgebildet ist. Für eine aus Aluminium ausgebildete Metallschicht (Al, s. Fig. 7a) wurde beispielsweise ermittelt, daß reflexive Bereiche mit einer Dicke t > 17 nm und transparente Bereiche mit einer Dicke t < 3 nm ausgebildet sind. Das Dickenverhältnis $\varepsilon$ ist folglich als $\varepsilon$ =17/3 = 5,67 zu wählen.

Tabelle 1 zeigt den ermittelten Reflexionsgrad von zwischen Plastikfolien (Brechungsindex n = 1,5) angeordneten Metallschichten aus Ag, Al, Au, Cr, Cu, Rh und Ti bei einer Licht-Wellenlänge $\lambda$ = 550 nm. Das Dickenverhältnis $\varepsilon$ ist hierbei als Quotient aus der für den Reflexionsgrad R = 80% des Maximums $R_{max}$ und der für den Reflexionsgrad R = 20% des Maximums $R_{max}$ erforderlichen Dicke t der Metallschicht gebildet.

Tabelle 1

| Metall | $R_{Max}$ | t für 80 % $R_{Max}$ | t für 20% $R_{Max}$ | $\varepsilon$ | h/d |
|---|---|---|---|---|---|
| Ag | 0,944 | 31 nm | 9 nm | 3,4 | 1,92 |
| Al | 0,886 | 12 nm | 2,5 nm | 4,8 | 2,82 |
| Au | 0,808 | 40 nm | 12 nm | 3,3 | 1,86 |
| Rh | 0,685 | 18 nm | 4,5 nm | 4,0 | 2,31 |
| Cu | 0,557 | 40 nm | 12 nm | 3,3 | 1,86 |
| Cr | 0,420 | 18 nm | 5 nm | 3,6 | 2,05 |

(fortgesetzt)

| Metall | $R_{Max}$ | t für 80 % $R_{Max}$ | t für 20% $R_{Max}$ | $\varepsilon$ | h/d |
|---|---|---|---|---|---|
| Ti | 0,386 | 29 nm | 8,5 nm | 3,3 | 1,86 |

Aus der heuristischen Betrachtung heraus haben Silber und Gold (Ag und Au), wie zu sehen ist, einen hohen maximalen Reflexionsgrad $R_{max}$ und erfordern ein relativ kleines Tiefen-zu-Breiten-Verhältnis zur Ausbildung von Transparenz. Aluminium (Al) hat zwar ein auch einen hohen maximalen Reflexionsgrad $R_{max}$, erfordert aber ein höheres Tiefen-zu-Breiten-Verhältnis. Vorzugsweise kann deshalb vorgesehen sein, die Metallschicht aus Silber oder Gold auszubilden. Es kann aber auch vorgesehen sein, die Metallschicht aus anderen Metallen oder aus Metallegierungen auszubilden.

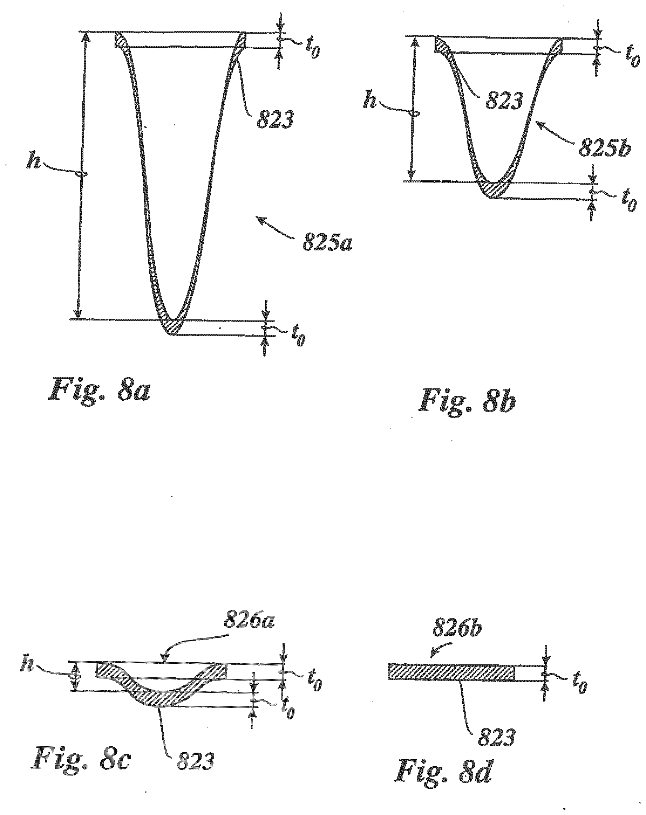

Die Figuren 8a bis 8d zeigen nun in schematischer Schnittdarstellung an einem Ausführungsbeispiel die Ausbildung von Reliefstrukturen 825a, 825b, 826a und 826b mit unterschiedlichem Transparenzgrad der aufgebrachten Metallschicht. Die genannte Reliefstrukturen weisen im dargestellten Beispiel Strukturelemente mit einem Abstand d = 350 nm zwischen zwei Strukturelementen auf. Der Abstand d ist in den Fig. 8a bis 8d nicht dargestellt. Die Reliefstruktur ist jeweils mit einer Metallschicht 823 belegt, die mit der nominalen Dicke $t_0$ = 40nm ausgebildet ist. Die Metallschicht 823 erscheint bei dieser Dicke auf einem ebenen Untergrund opak bzw. spiegelnd.

In Fig. 8a ist die transparente Reliefstruktur 825a schematisch dargestellt, die eine Tiefe h = 800 nm aufweist. Das für die Höhe des Transparenzgrades der Metallschicht 823 verantwortliche Tiefen-zu-Breiten-Verhältnis ist folglich h/d = 2,3.

In Fig. 8b ist die transparente Reliefstruktur 825b schematisch dargestellt, die eine Tiefe h = 400 nm aufweist. Das für die Höhe des Transparenzgrades der Metallschicht 823 verantwortliche Tiefen-zu-Breiten-Verhältnis ist folglich h/d = 1,14. Die Metallschicht 823 erscheint weniger transparent als in dem Ausführungsbeispiel in Fig. 8a.

In Fig. 8c ist die opake Reliefstruktur 826a schematisch dargestellt, die eine Tiefe h = 100 nm aufweist. Das für die Höhe des Transparenzgrades der Metallschicht 823 verantwortliche Tiefen-zu-Breiten-Verhältnis ist folglich h/d = 0,29. Der Transparenzgrad der Metallschicht 823 ist nunmehr so gering, daß die Metallschicht 823 opak erscheint, doch gegenüber dem in Fig. 8d dargestellten Ausführungsbeispiel mit einem transparenten Anteil ausgebildet.

In Fig. 8d ist die Reliefstruktur 826b schematisch dargestellt, die eine Tiefe h = 0 nm aufweist. Das für die Höhe des Transparenzgrades verantwortliche Tiefen-zu-Breiten-Verhältnis ist folglich h/d = 0. Die Metallschicht 823 erscheint vollständig opak, beispielsweise spiegelnd.

Tabelle 2 zeigt nun die Berechnungsergebnisse, gewonnen aus strengen Beugungsberechnungen für als lineare, sinusförmige Gitter mit einem Gitterabstand von 350 nm ausgebildete Reliefstrukturen mit unterschiedlichen Tiefen-zu-Breiten-Verhältnissen. Die Reliefstrukturen sind mit Silber beschichtet mit einer nominalen Dicke $t_0$ = 40 nm. Das Licht, das auf die Reliefstrukturen auftrifft, hat die Wellenlänge $\lambda$ = 550 nm (grün) und ist TE-polarisiert bzw. TM-polarisiert.

Tabelle 2

| Tiefen-zu-Breiten-Verhältnis | Gitterabstand in nm | Tiefe in nm | Reflexionsgrad (0R) TE | Transparenzgrad (0T) TE | Reflexionsgrad (0R) TM | Transparenzgrad (0T) TM |
|---|---|---|---|---|---|---|
| 0 | 350 | 0 | 84,5% | 9,4%. | 84,5% | 9,4% |
| 0,3 | 350 | 100 | 78,4% | 11,1 % | 50,0 % | 21,0 % |
| 0,4 | 350 | 150 | 42,0 % | 45,0 % | 31,0 % | 47,0 % |
| 1,1 | 350 | 400 | 2,3% | 82,3% | 1,6 % | 62,8 % |
| 2,3 | 350 | 800 | 1,2 % | 88,0% | 0,2 % | 77,0 % |

EP 1 786 632 B2

Wie sich zeigte, ist insbesondere der Transparenzgrad außer vom Tiefen-zu-Breiten-Verhältnis abhängig von der Polarisation des aufgestrahlten Lichtes. Diese Abhängigkeit ist in Tabelle 2 für das Tiefen-zu-Breiten-Verhältnis d/h =1,1 dargestellt. Es kann vorgesehen sein, diesen Effekt für sekundäre Sicherheitsmerkmale zu nutzen.

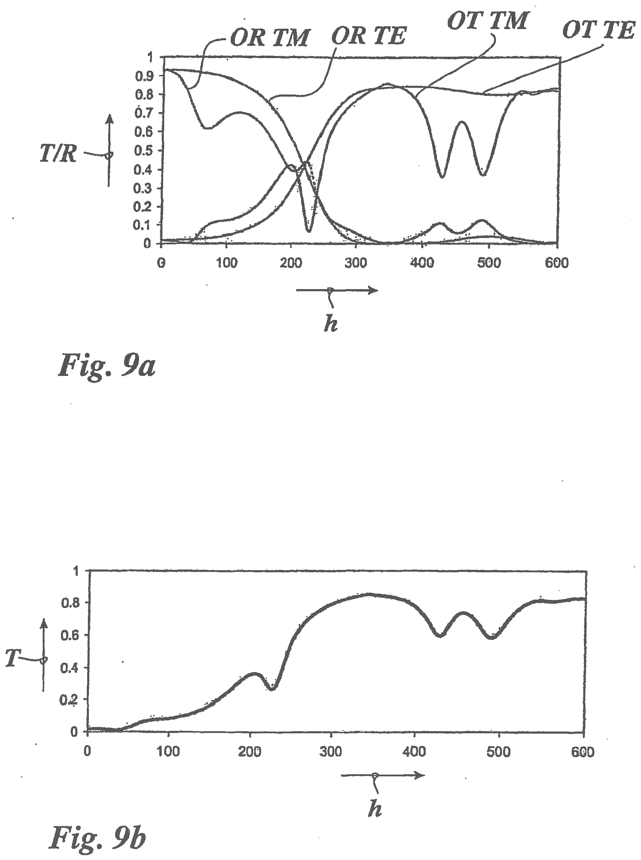

Weiterhin zeigte sich, daß der Transparenzgrad bzw. der Reflexionsgrad der erfindungsgemäßen Reliefstruktur wellenlängenabhängig ist. Fig. 9a bis 9e zeigen nun in graphischen Darstellungen Berechnungsergebnisse, die diesen Effekt belegen.

Fig. 9a zeigt in einer graphischen Darstellung den Reflexionsgrad R bzw. den Transparenzgrad T aufgetragen über der Gittertiefe h in Nanometer eines ersten sinusoidalen Gitters mit einer Gitterperiode bzw. einem Gitterabstand d = 300 nm. Die Gittertiefe variiert von h = 0 nm bis 600 nm, gleichbedeutend mit der Variation des Tiefen-zu-Breiten-Verhältnisses h/d = 0 bis 2. Das Gitter ist mit Silber beschichtet mit der Schichtdicke $t_0$ = 50 nm und mit polarisiertem Licht mit einer Wellenlänge $\lambda$ = 550 nm bestrahlt. Die Kurven sind mit OR TM für den Reflexionsgrad und mit OT TM für den Transparenzgrad TM-polarisierten Lichts bezeichnet und analog mit OR TE und OT TE für TE-polarisiertes Licht.

Wie in Fig. 9a zu sehen ist, ist der erfindungsgemäße Effekt besonders gut für TE-polarisiertes Licht ausgeprägt.

Fig. 9b zeigt nun den Transparenzgrad T des in Fig. 9a verwendeten Gitters mit unpolarisiertem Licht, aufgetragen über der Gittertiefe h.

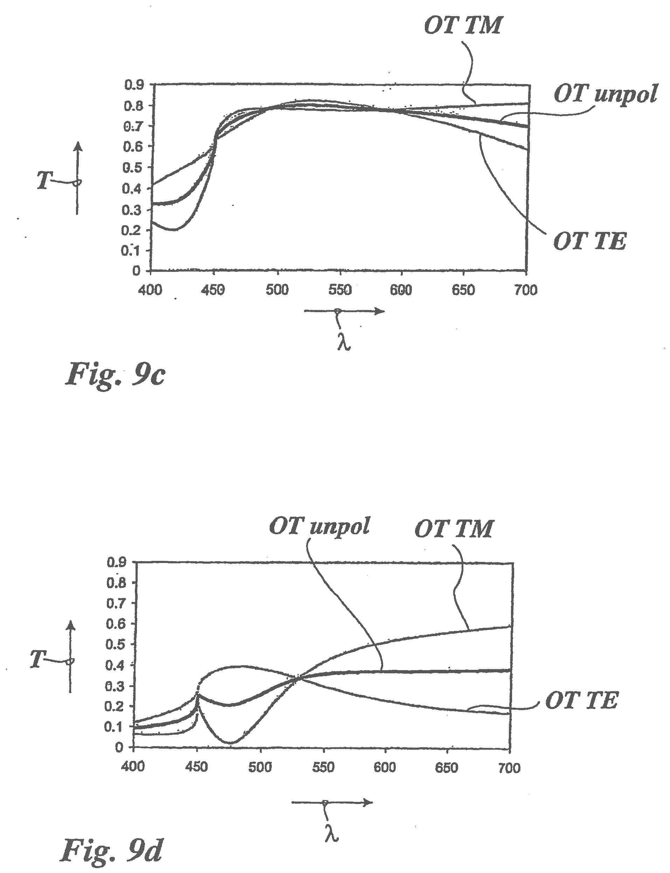

Fig. 9c zeigt den Einfluß der Wellenlänge des Lichtes auf den Transparenzgrad T bei einem zweiten sinusoidalen Gitter, ausgeführt analog zu Fig. 9a mit der Gittertiefe h = 300nm, gleichbedeutend mit dem Tiefen-zu-Breiten-Verhältnis h/d = 1. Wie zu sehen ist, haben sowohl Polarisation des Lichtes als auch die Art der Polarisation (OT TM bzw. OT TE) Einfluß auf den Transparenzgrad T, der zugleich abhängig von der Wellenlänge des Lichtes ist. Die mit OT unpol bezeichnete Kurve für unpolarisiertes Licht verläuft zwischen den beiden Kurven OT TM und OT TE für TMpolarisiertes bzw. TE-polarisiertes Licht.

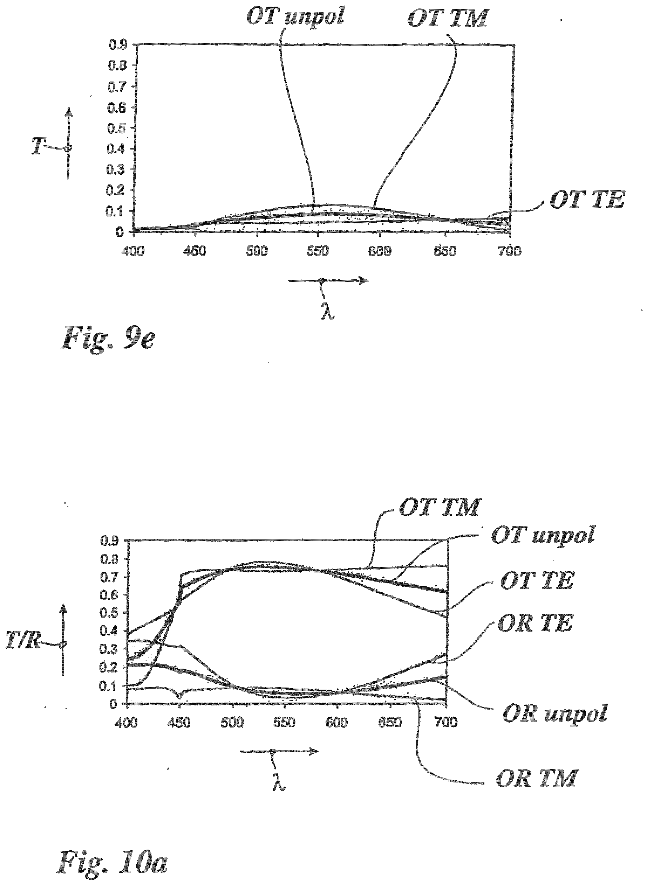

Die Fig. 9d und 9e zeigen nun den Einfluß eines abnehmenden Tiefen-zu-Breiten-Verhältnisses h/d auf diese Kurvenverläufe des Transparenzgrades T.

In Fig. 9d handelt es sich um die Darstellung des Transparenzgrads T an einem sinusoidalen Gitter nach Fig. 9c, das mit der Gittertiefe h = 200nm, gleichbedeutend mit dem Tiefen-zu-Breiten-Verhältnis h/d = 0,67 ausgeführt ist. Der Transparenzgrad T ist gegenüber Fig. 9c deutlich gesunken, insbesondere bei Bestrahlung mit unpolarisiertem Licht. Für Bestrahlung mit TM-polarisiertem Licht ist für $\lambda$ = 450 nm ein Transparenzgrad nahe Null zu beobachten.

Fig. 9e zeigt die Darstellung des Transparenzgrads an einem sinusoidalen Gitter nach Fig. 9c, das mit der Gittertiefe h = 100m, gleichbedeutend mit dem Tiefen-zu-Breiten-Verhältnis h/d = 0,33 ausgeführt ist. Nunmehr ist der Transparenzgrad T sehr gering, so daß die auf das Gitter aufgebrachte Metallschicht aus Silber bei allen Lichtwellenlängen undurchsichtig erscheint.

Wie die in Fig. 9a bis 9e dargestellten Berechnungsergebnisse zeigen, können erfindungsgemäße Reliefstrukturen mit hohem Tiefen-zu-Breiten-Verhältnis Farbeffekte ausbilden, die bei der Bestrahlung mit polychromatischem Licht, beispielsweise mit Tageslicht, zu beobachten sind. Es kann vorgesehen sein, diese Farbeffekte als ein zusätzliches sekundäres Sicherheitsmerkmal zu nutzen.

Weiterhin zeigte sich, daß der Transparenzgrad abnimmt, wenn der Einfallswinkel des Lichtes sich vom normalen Einfallswinkel unterscheidet, d.h. der Transparenzgrad nimmt ab, wenn das Licht nicht senkrecht einfällt. Das bedeutet, daß ein Bereich mit erfindungsgemäßer Reliefstruktur nur in einem begrenzten Einfallskegel des Lichtes transparent ausgebildet sein kann. Es kann deshalb vorgesehen sein, diesen Effekt als weiteres Sicherheitsmerkmal zu nutzen. Es kann vorgesehen sein, daß die Metallschicht bei schräger Betrachtung opak ausgebildet ist.

Die Figuren 10a bis 10c zeigen nun den Einfluß des Lichteinfallswinkels auf den Transparenzgrad T bzw. den Reflexionsgrad R. eines dritten sinusoidalen Gitters mit dem Gitterabstand d = 300 nm, beschichtet mit Silber mit einer Schichtdicke $t_0$ = 55 nm.

Fig. 10a zeigt in einem Diagramm die Ausgangssituation, wenn das Licht senkrecht einfällt. Der Verlauf des Transparenzgrades T entspricht qualitativ dem in Fig. 9c dargestellten Verlauf. Wie zu sehen ist, ist der Reflexionsgrad R weniger wellenlängenabhängig als der Transparenzgrad T. Das gilt insbesondere für die Beleuchtung des Gitters mit unpolarisiertem Licht.

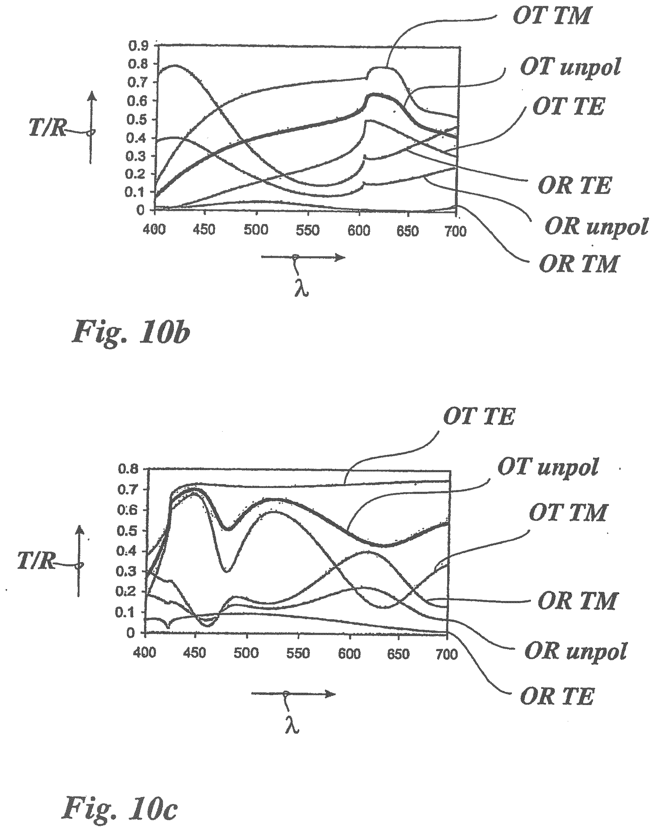

Fig. 10b zeigt nun den Verlauf des Transparenzgrades T bzw. des Reflexionsgrades R für Beleuchtung unter einem Winkel $\theta$ = 20° zur Senkrechten in Richtung lotrecht zu den Flanken der Gitterlinien und einem Winkel $\varphi$ = 0° zur Senkrechten in Richtung parallel zu den Flanken der Gitterlinien. Transparenzgrad T und Reflexionsgrad R sind nun im Vergleich zu Fig. 10a in einem weiten Bereich wellenlängenabhängig, insbesondere auch bei Beleuchtung mit unpolarisiertem Licht.

Fig. 10c zeigt den Verlauf des Transparenzgrades T bzw. des Reflexionsgrades R für Beleuchtung unter dem Winkel $\theta$ = 0° und $\varphi$ = 20°. Das Licht fällt nun also geneigt parallel zu den Flanken der Gitterlinien ein. Die wellenlängenabhängigen Verläufe sind im Vergleich zu Fig. 10b deutlich qualitativ verschieden.

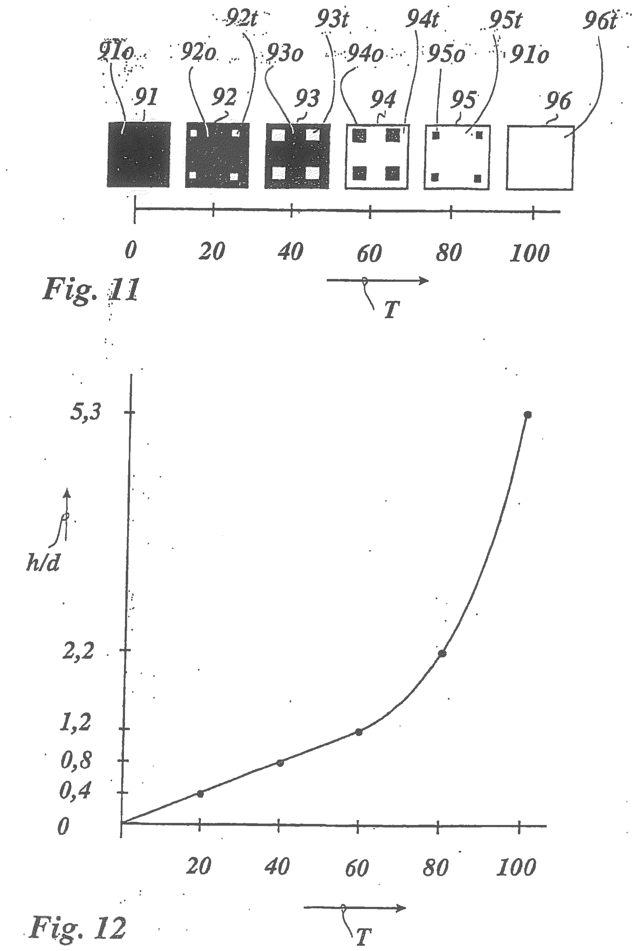

Fig. 11 zeigt nun in schematischer Darstellung ein Ausführungsbeispiel zur Erzeugung von Bereichen mit unterschiedlich ausgebildetem Transparenzgrad T. Dabei sind Bereiche 91 bis 96 mit unterschiedlichem Transparenzgrad T in Stufen von 20% ausgebildet, beginnend bei dem Bereich 91, der mit dem Transparenzgrad T = 0% ausgebildet ist, bis zum Bereich 96, der mit dem Transparenzgrad T = 100% ausgebildet ist. Wie in Fig. 11 gut zu sehen, sind dazu die Bereiche 91 bis 96 gerastert ausgebildet mit opaken Rasterelementen 91 o bis 95o und transparenten Rasterelementen 92t bis 96t. Die Bereiche 91 bis 96 können beispielsweise als Bildpunkte unterschiedlichen Transparenzgrades T ausgebildet sein.

Im dargestellten Ausführungsbeispiel sind in Fig. 11 die opaken Rasterelemente 91o bis 95o schwarz markiert und die transparenten Rasterelemente 92t bis 96t sind weiß markiert. Es handelt sich hierbei um eine grob schematische Darstellung, welche die wahren Größenverhältnisse zwischen Rasterelementen und Bereichen nicht wiedergibt. Der Transparenzgrad T eines jeden Bereiches 91 bis 96 ist durch das Verhältnis der Flächensumme der opaken Rasterelemente 91 o bis 95o zu der Flächensumme der transparenten Rasterelemente 92t bis 96t beschrieben. Die Rasterelemente sind mit Abmessungen ausgebildet, die durch das menschliche Auge nicht mehr auflösbar sind. Auf diese Weise gerasterte Bereiche 91 bis 96 erscheinen deshalb vorzugsweise bei Gleichverteilung der opaken und transparenten Rasterelemente visuell als Bereiche mit homogenem Transparenzgrad T.

Die opaken Rasterelemente 91o bis 95o sind im dargestellten Beispiel mit dem Tiefen-zu-Breiten-Verhältnis h/d = 0 und solcher nominaler Dicke $t_0$ der Metallschicht ausgebildet, daß sie den Transparenzgrad T = 0% haben. Die transparenten Rasterelemente 92t bis 96t sind mit einem hohem Tiefen-zu-Breiten-Verhältnis ausgebildet, d.h. vorzugsweise h/d > 2. Es kann aber auch vorgesehen sein, daß die opaken Rasterelemente 91o bis 95o mit einem kleinen Tiefen-zu-Breiten-Verhältnis ausgebildet sind, beispielsweise h/d = 0,1, und die transparenten Rasterelemente 92t bis 96t mit einem demgegenüber relativ hohen Tiefen-zu-Breiten-Verhältnis, beispielsweise h/d = 1, ausgebildet sind.

Die Bereiche 91 und 96 enthalten nur Rasterelemente eines Typs, so daß beispielsweise der Bereich 91, ausgebildet nur mit opaken Rasterelementen 91o, den Transparenzgrad T = 0% hat. Der Bereich 96 ist nur mit transparenten Rasterelementen 96t ausgebildet und hat deshalb den Transparenzgrad T = 100%. Die Bereiche 92 bis 95 sind sowohl mit opaken Rasterelementen 92o bis 95o als auch mit transparenten Rasterelementen 92t bis 95t ausgebildet und haben deshalb Transparenzgrade zwischen 20% und 80%.

Es kann auch vorgesehen sein, Bereiche mit unterschiedlichen Graustufen zu bilden, indem das Tiefen-zu-Breiten-Verhältnis in den Bereichen unterschiedlich ausgebildet wird. In Fig. 12 ist anhand eines Beispiels graphisch dargestellt, wie der Transparenzgrad T durch das Tiefen-zu-Breiten-Verhältnis h/d einstellbar ist. Wie bereits weiter oben ausgeführt, ist die Relation zwischen Transparenzgrad T und Tiefen-zu-Breiten-Verhältnis h/d von mehreren Parametern abhängig, beispielsweise von der Metallart und der Art der Reliefstruktur. Grundsätzlich gilt jedoch, daß der Transparenzgrad T mit steigendem Tiefen-zu-Breiten-Verhältnis h/d zunimmt. Im vorliegenden Beispiel ist der Transparenzgrad T = 100%, wenn das Tiefen-zu-Breiten-Verhältnis h/d = 5,3 ist. Dieses Verhältnis begründet sich aus dem heuristischen Lösungsansatz. Ohne merkliche Qualitätseinbuße kann der in Fig. 11 mit der Pos. 96 bezeichnete voll transparente Bereich bereits mit einem Tiefen-zu-Breiten-Verhältnis h/d = > 1,0 ausgebildet sein, beispielsweise mit h/d = 2,2, so daß der Transparenzgrad T = 80% ist. Ein niedrigeres Tiefen-zu-Breiten-Verhältnis kann beispielsweise technologisch vorteilhaft sein.

Auf diese in Fig. 11 und 12 beschriebene Weise kann vorgesehen sein, Bilddarstellungen zu generieren. Wegen der mit diesem Verfahren möglichen hohen Auflösung können auf diese Weise Bilder in hoher Abbildungsqualität erzeugt werden, beispielsweise als Beschriftungen oder Logos ausgebildet. Mit dem Verfahren der Schwarz-Weiß-Rasterung können beispielsweise Strichbilder oder Schwarz-Weiß-Raster-Bilder erzeugt werden. Wie bereits beschrieben (s. Fig. 11), ist dabei der Transparenzgrad eines Bildpunktes durch das Verhältnis zwischen opaken Rasterelementen und transparenten Rasterelementen bestimmt. Es kann aber auch vorgesehen sein, die Bildpunkte als homogene Bereiche mit unterschiedlichem Tiefen-zu-Breiten-Verhältnis auszubilden (s. Fig. 12). Auf diese Weise kann beispielsweise vorgesehen sein, Computerbilder im Graustufenmodus als Bilddarstellungen zu generieren. Wegen der mit diesem Verfahren möglichen hohen Auflösung können auf diese Weise Graustufenbilder in hoher Qualität erzeugt werden, beispielsweise können photographische Abbildungen in hoher Qualität vor einem beliebigen Hintergrund wiedergegeben werden.

Es ist aber auch möglich, Makrobereiche mit kontinuierlich sich ändernder Transparenz auszubilden und auf diese Weise unter einem derartigen Bereich angeordnete Elemente optisch "aufzublenden". Auf diese Weise kann beispielsweise ein Paßphoto ohne scharfe Randbegrenzung wiedergegeben sein.

Es kann auch vorgesehen sein, die in Fig. 11 und 12 charakterisierten Lösungen miteinander zu kombinieren und damit weitere Effekte zu erhalten. Beispielsweise kann vorgesehen sein, dem menschlichen Auge sichtbare Rasterelemente als gestaltendes Merkmal zu verwenden, beispielsweise in Form eines Zeitungsrasters ausgebildet.

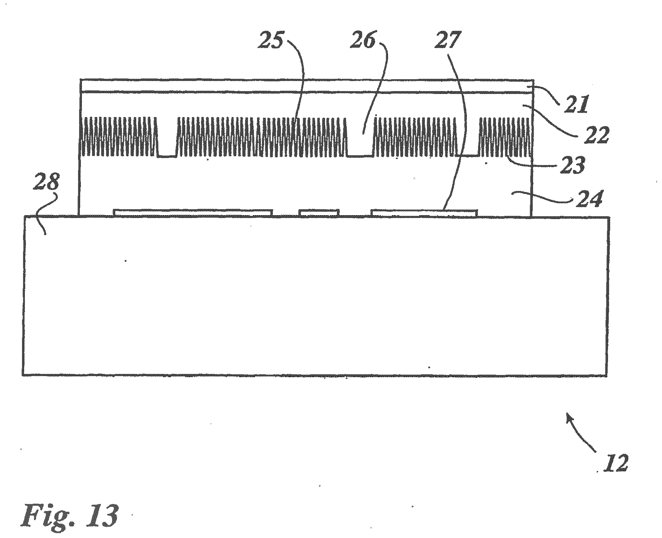

Fig. 13 zeigt nun eine schematische Darstellung eines Sicherheitsdokuments 12 mit einem Kartenkörper 28 und auf dem Kartenkörper 28 angeordneten Bildelementen 27 und dem in Fig. 1 dargestellten Sicherheitselement 11. Gleiche Elemente sind mit gleichen Positionen bezeichnet.

Das Sicherheitselement 11 wird dazu von der Trägerfolie 10 abgezogen und auf den Kartenkörper 28 aufgebracht. Die Ablöseschicht 20 (siehe Fig. 1) unterstützt dabei das Ablösen des Sicherheitselements von der Trägerfolie 10.

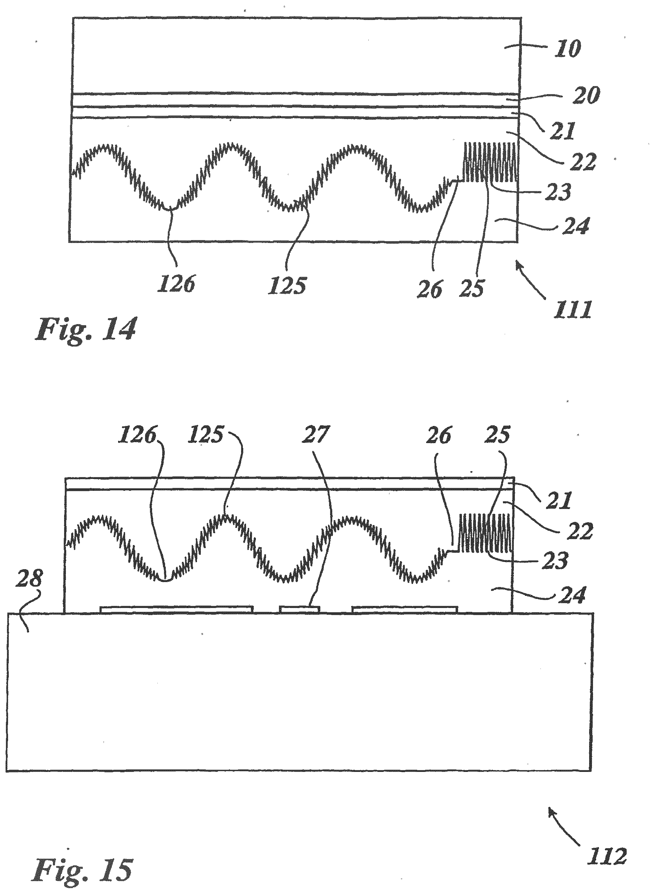

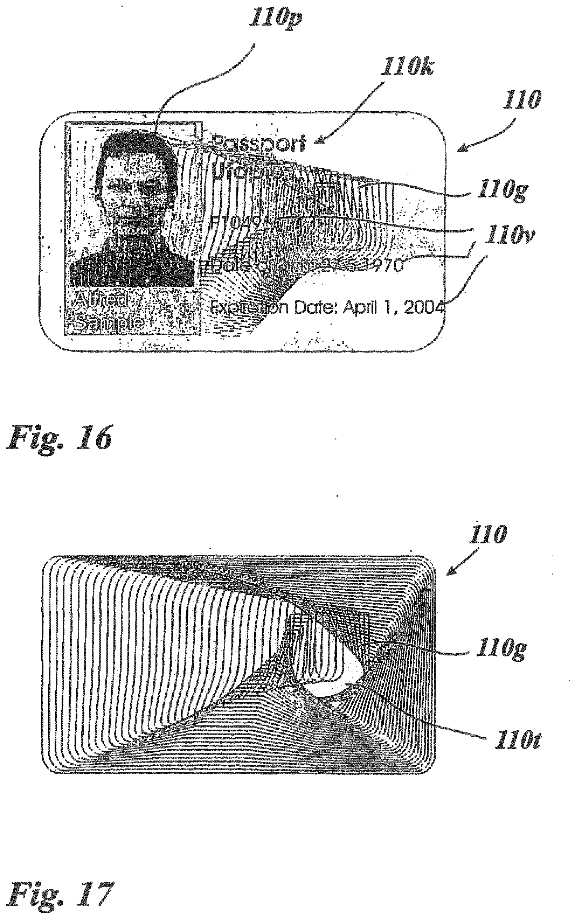

Durch das Aufbringen des Sicherheitselements 11 sind nun nur noch die Bereiche der Bildelemente 27 sichtbar, die unter Reliefstrukturen 25 angeordnet sind. Die Bildelemente 27, die unter Reliefstrukturen 26 angeordnet sind, sind für einen Betrachter des Sicherheitsdokuments nicht sichtbar. Sie erscheinen wegen der Metallschicht 23 als reflektierende Bereiche, die wie in den Figuren 15 und 16 besonders gut zu sehen ist, als feines Muster in Form einer Guilloche ausgebildet sein können. Ein nach dem vorstehend beschriebenen Verfahren aufgebrachtes Muster kann so fein ausgebildet sein, daß es mit einem anderen Verfahren, beispielsweise einem Farbkopierverfahren, nicht nachgeahmt werden kann.

Die Figuren 14 und 15 zeigen nun ein zweites Ausführungsbeispiel eines Sicherheitselements und eines mit diesem Sicherheitselement versehenen Sicherheitsdokuments, wobei gleiche Elemente mit gleicher Position bezeichnet sind.

Fig. 14 zeigt ein Sicherheitselement 111 in Form eines mehrschichtigen Folienkörpers, der die Trägerfolie 10, die Ablöseschicht 20, die Schutzlackschicht 21, die Replizierlackschicht 22 mit den Reliefstrukturen 25, 26 und weiteren Reliefstrukturen 125, 126, die Metallschicht 23 und die Klebeschicht 24 aufweist. Die Reliefstrukturen 125 und 126 sind als Überlagerungen einer im dargestellten schematischen Beispiel sinusförmig ausgebildeten Struktur mit Reliefstrukturen 25 bzw. 26 ausgebildet. Bei der überlagerten Struktur kann es sich beispielsweise um eine Struktur zur Generierung eines Hologramms handeln, das auf diese Weise in den Bereichen der Reliefstruktur 125 sichtbar erscheint und in den Bereichen der Reliefstruktur 126 unsichtbar erscheint. Beispielsweise können dabei die Reliefstrukturen 26 und 126 eine Guilloche bilden, die mit herkömmlichen Verfahren nicht reproduzierbar ist, also als Sicherheitsmerkmal ausgebildet ist.

Fig. 15 zeigt in Analogie zu Fig. 13 ein Sicherheitsdokument 112 in schematischer Darstellung, auf das ein Sicherheitselement 111 nach Fig. 14 aufgebracht ist.

Die Figuren 16 und 17 zeigen nun ein Anwendungsbeispiel eines Ausweisdokuments 110. Das Ausweisdokument 110 weist ein Photo 110p des Ausweisinhabers, Beschriftung 110k, personalisierte Beschriftung 110v und eine Guilloche 110g auf.

Im dargestellten Ausführungsbeispiel sind das Photo 110p, die Beschriftung 110k und die personalisierte Beschriftung 110v nach dem Stand der Technik auf den Kartenkörper des Ausweisdokuments 110 aufgebracht. Über die gesamte Kartenoberfläche ist die Guilloche 110g gelegt, die in Fig. 17 zur besseren Verdeutlichung im einzelnen dargestellt ist. Die Linien der Guilloche 110g sind im dargestellten Beispiel als Bereiche mit einem Tiefen-zu-Breüen-Verhältnis < 0,2 und einer Breite von 50 $\mu$m ausgeführt, die unmittelbar an transparente Bereiche mit einem hohen Tiefen-zu-Breiten-Verhältnis grenzen. Dadurch ist das Ausweisdokument auf besonders einfache Weise fälschungssicher ausgeführt, denn die Guilloche 110g kann mit einem anderen Verfahren nicht aufgebracht werden.

Ein Sicherheitsdokument, das wie das in Fig..16 dargestellte Ausführungsbeispiel ausgebildet ist, vereint den Vorteil erhöhter Fälschungssicherheit mit dem Vorteil vereinfachter und präziserer Herstellung. Weil nämlich transparente und opake Bereiche in einem Verfahrensschritt herstellbar sind, entfallen die Positionierungsprobleme, die beim passergenauen Registerdruck auftreten, d.h. es müssen nicht wie bisher transparente Bereiche, opake Bereiche und Hintergrundbereiche zueinander mit hoher Genauigkeit positioniert werden. Das erfindungsgemäße Verfahren sieht vor, transparente und opake Bereiche durch Oberflächenstrukturierung auszubilden und zwar genau dort, wo sie vorgesehen sind. Dabei können Mehrschicht-Dünnfilmsysteme, Flüssigkristall-Systeme usw. eingeschlossen sein.

## Patentansprüche

1. Sicherheitselement (11) in Form eines mehrschichtigen Folienkörpers mit einer Replizierlackschicht (22), wobei in einer von Koordinatenachsen x und y aufgespannten Ebene in die Replizierlackschicht (22) eine erste Reliefstruktur (25) in einem ersten Bereich des Sicherheitselements abgeformt ist und auf die Replizierlackschicht (22) in dem ersten Bereich des Sicherheitselements (11) und in einem benachbarten zweiten Bereich des Sicherheitselements (11) eine Metallschicht (23) mit konstanter Flächendichte bezogen auf die von den Koordinatenachsen x und y aufgespannte Ebene aufgebracht ist, wobei auf die Replizierlackschicht keine Dünnfilmschicht bestehend aus einer Chromschicht einer Dicke von 8 nm, einer $MgF_2$-Schicht einer Dicke von 215 nm und einer Al-Schicht einer Dicke von 50 nm aufgebracht ist,
**dadurch gekennzeichnet,**
**daß** die erste Reliefstruktur (25) eine diffraktive Struktur mit einem Tiefen-zu-Breiten-Verhältnis der einzelnen Strukturelemente von > 0,5 ist und daß die Metallschicht (23) in einer nominalen Schichtdicke $t_o$ ausgebildet ist, bei welcher die Transparenz der Metallschicht (23) durch die erste Reliefstruktur (25) im ersten Bereich gegenüber der Transparenz der Metallschicht (23) im zweiten Bereich erhöht ist.

2. Sicherheitselement nach Anspruch 1,
**dadurch gekennzeichnet,**
**daß** die Metallschicht (23) in einer Flächendichte auf die Replizierlackschicht (22) aufgebracht ist, die einem Auftrag der Metallschicht (23) auf einer ebenen Fläche mit einem Tiefen-zu-Breiten-Verhältnis gleich Null mit einem Reflexionsgrad der Metallschicht von 85% bis 95% des maximalen Reflexionsgrades entspricht.

3. Sicherheitselement nach einem der vorhergehenden Ansprüche,
**dadurch gekennzeichnet,**
**daß** die Tiefe der Reliefstruktur (25) als eine Funktion der Koordinaten x und/oder y ausgebildet ist.

4. Sicherheitselement nach Anspruch 3,
**dadurch gekennzeichnet,**
**daß** die Funktion eine stochastische Funktion ist.

5. Sicherheitselement nach Anspruch 3,
**dadurch gekennzeichnet,**
**daß** die Funktion eine Funktion der Art $\sin^2(x,y)$ ist.

6. Sicherheitselement nach einem der vorhergehenden Ansprüche,
**dadurch gekennzeichnet,**
**daß** in den benachbarten zweiten Bereich in die Replizierlackschicht (22) eine zweite diffraktive Reliefstruktur (26) abgeformt ist, wobei das Tiefen-zu-Breiten-Verhältnis der einzelnen Strukturelemente der zweiten Reliefstruktur kleiner als das Tiefen-zu-Breiten-Verhältnis der einzelnen Strukturelemente der ersten Reliefstruktur ist.

7. Sicherheitselement nach einem der vorhergehenden Ansprüche,
**dadurch gekennzeichnet,**
**daß** die zweite Reliefstruktur (26) ein Tiefen-zu-Breiten-Verhältnis von < 0,2 aufweist.

8. Sicherheitselement nach einem der vorhergehenden Ansprüche,
**dadurch gekennzeichnet,**
**daß** die zweite Reliefstruktur (26) ein Tiefen-zu-Breiten-Verhältnis von < 0,5 aufweist.

9. Sicherheitselement nach einem der vorhergehenden Ansprüche,
**dadurch gekennzeichnet,**
**daß** der zweite Bereich ein Musterbereich, insbesondere in Form einer Guilloche oder eines Logos oder eines Textes ist und der erste Bereich ein Hintergrundbereich ist.

10. Sicherheitselement nach einem der vorhergehenden Ansprüche,
**dadurch gekennzeichnet,**
**daß** das Tiefen-zu-Breiten-Verhältnis der ersten Reliefstruktur (25) und/oder der zweiten Reliefstruktur (26) in x-Richtung und/oder in y-Richtung variiert.

11. Sicherheitselement nach einem der vorhergehenden Ansprüche,
**dadurch gekennzeichnet,**
**daß** der erste Bereich oder der zweite Bereich in Mikrobereichen gerastert ausgebildet ist, wobei die Abmessungen der Mikrobereiche und/oder der Rasterabstand kleiner als der durch das menschliche Auge auflösbare Abstand sind bzw. ist.

12. Sicherheitselement nach einem der vorhergehenden Ansprüche,
**dadurch gekennzeichnet,**
**daß** die zweite Reliefstruktur eine ein Muster generierende beugungsoptisch wirkende Struktur, Makrostruktur oder Mattstruktur ist.

13. Sicherheitselement nach einem der vorhergehenden Ansprüche,
**dadurch gekennzeichnet,**
**daß** die erste oder zweite Reliefstruktur (125, 126) aus einer Überlagerung einer Hüllstruktur und einer diffraktiven Struktur mit einem Tiefen-zu-Breiten-Verhältnis der einzelnen Strukturelemente von > 0,5 gebildet ist.

14. Sicherheitselement nach Anspruch 13,
**dadurch gekennzeichnet,**
**daß** die Hüllstruktur eine beugungsoptisch wirkende Struktur ist, insbesondere eine ein Hologramm generierende Reliefstruktur ist.

**15.** Sicherheitselement nach Anspruch 13,
**dadurch gekennzeichnet,**
**daß** die Hüllstruktur eine Makrostruktur ist.

**16.** Sicherheitselement nach Anspruch 13,
**dadurch gekennzeichnet,**
**daß** die Hüllstruktur eine Mattstruktur ist.

**17.** Sicherheitselement nach einem der vorhergehenden Ansprüche,
**dadurch gekennzeichnet,**
**daß** der mehrschichtige Folienkörper eine Transferfolie, insbesondere eine Heißprägefolie, ist.

**18.** Sicherheitsdokument, insbesondere Banknote oder Reisepaß, mit einem Sicherheitselement nach einem der vorhergehenden Ansprüche.

**19.** Verfahren zur Herstellung eines Sicherheitselements (11, 111) in Form eines mehrschichtigen Folienkörpers, wobei bei dem Verfahren in eine Replizierlackschicht (22) des mehrschichtigen Folienkörpers in einem ersten Bereich des Sicherheitselements (11, 111) eine erste Reliefstruktur (25) abgeformt wird und auf die Replizierlackschicht (22) in dem ersten Bereich des Sicherheitselements (11) und in einem benachbarten zweiten Bereich des Sicherheitselements (11) eine Metallschicht (23) mit konstanter Flächendichte bezogen auf die von der Replizierlackschicht (22) aufgespannte Ebene aufgebracht wird, wobei auf die Replizierlackschicht keine Dünnfilmschicht bestehend aus einer Chromschicht einer Dicke von 8 nm, einer $MgF_2$-Schicht einer Dicke von 215 nm und einer Al-Schicht einer Dicke von 50 nm aufgebracht wird,
**dadurch gekennzeichnet,**
**daß** die erste Reliefstruktur (25) als eine diffraktive Struktur mit einem Tiefen-zu-Breiten-Verhältnis > 0,5 abgeformt wird und die Metallschicht (23) mit einer Flächendichte bezogen auf die von der Replizierlackschicht (22) aufgespannte Ebene aufgebracht und in einer nominalen Schichtdicke $t_0$ ausgebildet wird, derart dass die Transparenz der Metallschicht (23) durch die erste Reliefstruktur (25) im ersten Bereich gegenüber der Transparenz der Metallschicht (23) im zweiten Bereich erhöht wird

**20.** Verfahren nach Anspruch 19,
**dadurch gekennzeichnet,**
**daß** die Metallschicht (23) durch Bedampfen, insbesondere Sputtern, Elektronenstrahlbedampfen oder thermisches Bedampfen mittels Widerstandsheizung auf die Replizierlackschicht (22) aufgebracht wird.

**21.** Verfahren nach Anspruch 20,
**dadurch gekennzeichnet,**
**daß** ein Metall zur Bildung der Metallschicht (23) in einer solchen Flächendichte auf der durch die Replizierlackschicht (22) aufgespannten Ebene abgeschieden wird, die einem Auftrag der Metallschicht (23) auf einer senkrecht zur Abscheidungsrichtung angeordneten ebenen Fläche mit Tiefen-zu-Breiten-Verhältnis gleich Null mit einem Reflexionsgrad der Metallschicht von 85% bis 95% des maximalen Reflexionsgrades einer optisch undurchlässigen Metallschicht des Metalls entspricht.

**22.** Verfahren nach einem der Ansprüche 19 bis 21,
**dadurch gekennzeichnet,**
**daß** in einem dritten Bereich des Sicherheitselements (111) eine dritte Reliefstruktur (125, 126) ausgeformt wird, die als Überlagerung einer Hüllkurve mit einer vierten Reliefstruktur und der ersten Reliefstruktur (25) und/oder der zweiten Reliefstruktur (26) ausgebildet ist, so daß in den mit der ersten Reliefstruktur (25) überlagerten Teilbereichen des dritten Bereichs die durch die vierte Reliefstruktur verkörperte Information sichtbar ist und in den mit der zweiten Reliefstruktur (26) überlagerten Teilbereichen des dritten Bereichs die durch die vierte Reliefstruktur verkörperte Information nicht sichtbar ist.

**23.** Verfahren nach einem der Ansprüche 19 bis 22,
**dadurch gekennzeichnet,**
**daß** die Reliefstrukturen mittels UV-Replikation in der Replizierlackschicht (22) abgeformt werden.

**Claims**

1. Security element (11) in the form of a multilayer film body having a replication lacquer layer (22), wherein, in a plane spanned by coordinate axes x and y, a first relief structure (25) is impressed into the replication lacquer layer (22) in a first region of the security element and a metal layer (23) with constant surface density relative to the plane spanned by the coordinate axes x and y is applied to the replication lacquer layer (22) in the first region of the security element (11) and in an adjacent second region of the security element (11), wherein no thin film layer consisting of a chromium layer of a thickness of 8nm, an $MgF_2$ layer of a thickness of 215nm and an Al layer of a thickness of 50nm is applied to the replication lacquer layer,
   **characterized in that** the first relief structure (25) is a diffractive structure having a depth-to-width ratio of the individual structure elements of > 0.5, and **in that** the metal layer (23) is formed within a nominal layer thickness to in the case of which the transparency of the metal layer (23) is increased by the first relief structure (25) in the first region with respect to the transparency of the metal layer (23) in the second region.

2. Security element according to Claim 1,
   **characterized in that** the metal layer (23) is applied to the replication lacquer layer (22) with a surface density which corresponds to an application of the metal layer (23) on a planar surface with a depth-to-width ratio equal to zero with a reflectance of the metal layer of 85% to 95% of the maximum reflectance.

3. Security element according to any of the preceding claims,
   **characterized**
   **in that** the depth of the relief structure (25) is embodied as a function of the coordinates x and/or y.

4. Security element according to Claim 3,
   **characterized in that** the function is a stochastic function.

5. Security element according to Claim 3,
   **characterized in that** the function is a function of the type $\sin^2(x, y)$.

6. Security element according to any of the preceding claims,
   **characterized**
   **in that** a second diffractive relief structure (26) is impressed into the adjacent second region into the replication lacquer layer (22), wherein the depth-to-width ratio of the individual structure elements of the second relief structure is less than the depth-to-width ratio of the individual structure elements of the first relief structure.

7. Security element according to any of the preceding claims,
   **characterized**
   **in that** the second relief structure (26) has a depth-to-width ratio of < 0.2.

8. Security element according to any of the preceding claims,
   **characterized**
   **in that** the second relief structure (26) has a depth-to-width ratio of < 0.5.

9. Security element according to any of the preceding claims,
   **characterized**
   **in that** the second region is a pattern region, in particular in the form of a guilloche or a logo or a text, and the first region is a background region.

10. Security element according to any of the preceding claims,
    **characterized**
    **in that** the depth-to-width ratio of the first relief structure (25) and/or of the second relief structure (26) varies in the x direction and/or in the y direction.

11. Security element according to any of the preceding claims,
    **characterized**
    **in that** the first region or the second region is embodied in rastered fashion in microregions, wherein the dimensions of the microregions and/or the raster distance are/is less than the distance that can be resolved by the human eye.

**12.** Security element according to any of the preceding claims,
**characterized**
**in that** the second relief structure is a pattern-generating structure having a diffraction-optical effect, macrostructure or matt structure.

**13.** Security element according to any of the preceding claims,
**characterized**
**in that** the first or second relief structure (125, 126) is formed from a superimposition of an enveloping structure and a diffractive structure having a depth-to-width ratio of the individual structure elements of > 0.5.

**14.** Security element according to Claim 13,
**characterized**
**in that** the enveloping structure is a structure having a diffraction-optical effect, in particular a relief structure that generates a hologram.

**15.** Security element according to Claim 13,
**characterized**
**in that** the enveloping structure is a macrostructure.

**16.** Security element according to Claim 13,
**characterized**
**in that** the enveloping structure is a matt structure.

**17.** Security element according to any of the preceding claims,
**characterized**
**in that** the multilayer film body is a transfer film, in particular a hot embossing film.

**18.** Security document, in particular banknote or passport, comprising a security element according to any of the preceding claims.

**19.** Method for producing a security element (11, 111) in the form of a multilayer film body, wherein, in the method, a first relief structure (25) is impressed into a replication lacquer layer (22) of the multilayer film body in a first region of the security element (11, 111) and a metal layer (23) with constant surface density relative to the plane spanned by the replication lacquer layer (22) is applied to the replication lacquer layer (22) in the first region of the security element (11) and in an adjacent second region of the security element (11), wherein no thin film layer consisting of a chromium layer of a thickness of 8nm, an $MgF_2$ layer of a thickness of 215nm and an Al layer of a thickness of 50nm is applied to the replication lacquer layer,
**characterized**
**in that** the first relief structure (25) is impressed as a diffractive structure having a depth-to-width ratio of > 0.5, and the metal layer (23) is applied with a surface density relative to the plane spanned by the replication lacquer layer (22) and is formed with a nominal layer thickness to in such a way that the transparency of the metal layer (23) is increased by the first relief structure (25) in the first region with respect to the transparency of the metal layer (23) in the second region.

**20.** Method according to Claim 19,
**characterized**
**in that** the metal layer (23) is applied to the replication lacquer layer (22) by vapour deposition, in particular sputtering, electron beam vapour deposition or thermal vapour deposition by means of resistance heating.

**21.** Method according to Claim 20,
**characterized**
**in that** a metal for forming the metal layer (23) is deposited on the plane spanned by the replication lacquer layer (22) with such a surface density which corresponds to an application of the metal layer (23) on a planar surface - arranged perpendicular to the deposition direction - with a depth-to-width ratio equal to zero with a reflectance of the metal layer of 85% to 95% of the maximum reflectance of an optically opaque metal layer of the metal.

**22.** Method according to any of Claims 19 to 21,
**characterized**

**in that** a third relief structure (125, 126) is shaped in a third region of the security element (111), said third relief structure being embodied as a superimposition of an envelope curve with a fourth relief structure and the first relief structure (25) and/or the second relief structure (26), such that the information embodied by the fourth relief structure is visible in those partial regions of the third region which are superimposed with the first relief structure (25) and the information embodied by the fourth relief structure is not visible in those partial regions of the third region which are superimposed with the second relief structure (26).

**23.** Method according to any of Claims 19 to 22,
**characterized**
**in that** the relief structures are impressed by means of UV replication in the replication lacquer layer (22).


**Revendications**

**1.** Élément de sécurité (11) sous forme de corps de film multicouches avec une couche de laque de réplique (22), sachant que sur une surface formée par des axes de coordonnées x et y dans la couche de laque de réplique (22), est moulée une première structure à relief (25) dans une première zone de l'élément de sécurité et que sur la couche de laque de réplique (22) dans la première zone de l'élément de sécurité (11) et dans une deuxième zone voisine de l'élément de sécurité (11), est appliquée une couche métallique (23) ayant une densité de surface constante par rapport à celle de la surface formée par les axes de coordonnées x et y, sachant que sur la couche de réplique n'est pas appliquée une couche de film mince se composant d'une couche de chrome ayant une épaisseur de 8 nm, d'une couche de $MgF_2$ ayant une épaisseur de 215 nm et d'une couche d'Al ayant une épaisseur de 50 nm,
**caractérisé en ce que**
la première structure à relief (25) est une structure diffractée avec un rapport profondeur-largeur de chacun des éléments de structure > 0,5 et **en ce que** la couche métallique (23) est formée avec une épaisseur de couche nominale to, sachant que la transparence de la couche métallique (23) est augmentée par la première structure à relief (25) dans la première zone par rapport à la transparence de la couche métallique (23) dans la deuxième zone.

**2.** Élément de sécurité selon la revendication 1,
**caractérisé en ce que**
la couche métallique (23) est appliquée dans une densité de surface sur la couche de laque de réplique (22) qui correspond à l'application de la couche métallique (23) sur une surface plane avec un rapport profondeur-largeur quasi nul avec un degré de réflexion de la couche métallique de 85 % à 95 % du degré de réflexion maximal.

**3.** Élément de sécurité selon l'une des revendications précédentes,
**caractérisé en ce que**
la profondeur de la structure à relief (25) est conçue comme fonction des coordonnées x et/ou y.

**4.** Élément de sécurité selon la revendication 3,
**caractérisé en ce que**
la fonction est une fonction stochastique

**5.** Élément de sécurité selon la revendication 3,
**caractérisé en ce que**
la fonction est une fonction de type $\sin^2 (x, y)$.

**6.** Élément de sécurité selon l'une des revendications précédentes,
**caractérisé en ce que**
dans la deuxième zone voisine dans la couche de laque de réplique (22) est moulée une deuxième structure à relief diffractée (26), sachant que le rapport profondeur-largeur de chacun des éléments de structure de la deuxième structure à relief est inférieur au rapport profondeur-largeur de chacun des éléments de structure de la première structure à relief.

**7.** Élément de sécurité selon l'une des revendications précédentes,
**caractérisé en ce que**
la deuxième structure à relief (26) présente un rapport profondeur-largeur < 0,2.

**8.** Élément de sécurité selon l'une des revendications précédentes,

**caractérisé en ce que**
la deuxième structure à relief (26) présente un rapport profondeur-largeur < 0,5.

9. Élément de sécurité selon l'une des revendications précédentes,
   **caractérisé en ce que**
   la deuxième zone est une zone de motifs, en particulier sous forme de guilloche ou de logo ou de texte, et la première zone est une zone d'arrière-plan.

10. Élément de sécurité selon l'une des revendications précédentes,
    **caractérisé en ce que**
    le rapport profondeur-largeur de la première structure à relief (25) et/ou de la deuxième structure à relief (26) varie dans la direction x et/ou dans la direction y.

11. Élément de sécurité selon l'une des revendications précédentes,
    **caractérisé en ce que**
    la première zone ou la deuxième zone est formée en microzones tramées, sachant que les dimensions des microzones et/ou l'écart de trames sont ou est inférieur(es) à l'écart perceptible par l'œil humain.

12. Élément de sécurité selon l'une des revendications précédentes,
    **caractérisé en ce que**
    la deuxième structure à relief est une structure, une macrostructure ou une structure mate donnant un effet optique de diffraction générant un motif.

13. Élément de sécurité selon l'une des revendications précédentes,
    **caractérisé en ce que**
    la première ou la deuxième structure à relief (125, 126) est formée à partir d'une superposition d'une structure enveloppante et d'une structure diffractée avec un rapport profondeur-largeur de chacun des éléments de structure > 0,5.

14. Élément de sécurité selon la revendication 13,
    **caractérisé en ce que**
    la structure enveloppante est une structure donnant un effet optique de diffraction, en particulier une structure à relief générant un hologramme.

15. Élément de sécurité selon la revendication 13,
    **caractérisé en ce que**
    la structure enveloppante est une macrostructure.

16. Élément de sécurité selon la revendication 13,
    **caractérisé en ce que**
    la structure enveloppante est une structure mate.

17. Élément de sécurité selon l'une des revendications précédentes,
    **caractérisé en ce que**
    le corps de film multicouches est un film de transfert, en particulier un film d'estampage à chaud.

18. Document de sécurité, en particulier un billet de banque ou un passeport, avec un élément de sécurité selon l'une des revendications précédentes.

19. Procédé de fabrication d'un élément de sécurité (11, 111) sous forme d'un corps de film multicouches, sachant que, lors du procédé, une première structure à relief (25) est moulée dans une couche de laque de réplique (22) du corps de film multicouches dans une première zone de l'élément de sécurité (11, 111) et qu'une couche métallique (23) avec une densité de surface constante par rapport à la surface formée par la couche de laque de réplique (22) est appliquée sur la couche de laque de réplique (22) dans la première zone de l'élément de sécurité (11) et dans une deuxième zone voisine de l'élément de sécurité (11), sachant que, sur la couche de réplique n'est pas appliquée une couche de film mince se composant d'une couche de chrome ayant une épaisseur de 8 nm, d'une couche de $MgF_2$ ayant une épaisseur de 215 nm et d'une couche d'Al ayant une épaisseur de 50 nm,
    **caractérisé en ce que**

la première structure à relief (25) est moulée sous forme d'une structure diffractée avec un rapport profondeur-largeur > 0,5 et la couche métallique (23) avec une densité de surface par rapport à la surface formée par la couche de laque de réplique (22) est appliquée et formée avec une épaisseur de couche nominale to, de telle sorte que la transparence de la couche métallique (23) est augmentée par la première structure à relief (25) dans la première zone par rapport à la transparence de la couche métallique (23) dans la deuxième zone.

20. Procédé selon la revendication 19,
**caractérisé en ce que**
la couche métallique (23) est appliquée sur la couche de laque de réplique (22) par vaporisation, en particulier par dépôt par pulvérisation, par pulvérisation par faisceau d'électrons ou par pulvérisation thermique à l'aide d'un chauffage par résistance.

21. Procédé selon la revendication 20,
**caractérisé en ce que**
un métal servant à former la couche métallique (23) est déposé sur la surface formée par la couche de laque de réplique (22) avec une densité de surface qui correspond à l'application de la couche métallique (23) sur une surface verticale au sens de dépôt avec un rapport profondeur-largeur quasi nul avec un degré de réflexion de la couche métallique de 85 % à 95 % du degré de réflexion maximal d'une couche métallique du métal à l'optique opaque.

22. Procédé selon l'une des revendications 19 à 21,
**caractérisé en ce que**
dans une troisième zone de l'élément de sécurité (111) est formée une troisième structure à relief (125, 126) qui est conçue comme une superposition d'une courbe enveloppante et d'une quatrième structure à relief et de la première structure à relief (25) et/ou la deuxième structure à relief (26), de telle sorte que dans les parties de la troisième zone superposées à la première structure à relief (25), l'information formée par la quatrième structure à relief soit visible et que dans les parties de la troisième zone superposées à la deuxième structure à relief (26), l'information formée par la quatrième structure à relief soit invisible.

23. Procédé selon l'une des revendications 19 à 22
**caractérisé en ce que**
les structures à relief sont moulées dans la couche de laque de réplique (22) à l'aide de répliques UV.

*Fig. 1*

*Fig. 2*

**Fig. 3**

**Fig. 4**

Fig. 5

Fig. 6

*Fig. 7a*

*Fig. 7b*

**Fig. 8a**

**Fig. 8b**

**Fig. 8c**

**Fig. 8d**

*Fig. 9a*

*Fig. 9b*

**Fig. 9c**

**Fig. 9d**

Fig. 9e

Fig. 10a

Fig. 10b

Fig. 10c

Fig. 11

Fig. 12

Fig. 13

**Fig. 14**

10
20
21
22
23
24

126    125    26    25

111

**Fig. 15**

126    125    27    26    25

21
22
23
24

28

112

**Fig. 16**

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2136352 A

- EP 758587 A